# FASCICULE DE BREVET EUROPEEN

(11) **EP 4 006 447 B1**
(45) Date de publication et mention de la délivrance du brevet: **25.10.2023**
(21) Numéro de dépôt: 21209991.5
(22) Date de dépôt: 23.11.2021
(51) Int. Cl.: F25B 15/04, F25B 40/00, F25B 25/02, F25B 37/00

(54) **MACHINE À ABSORPTION**
ABSORPTIONSMASCHINE
ABSORPTION MACHINE

(30) Priorité: 27.11.2020 FR 2012308
(43) Date de publication de la demande: 01.06.2022
(73) Titulaire: Commissariat à l'Energie Atomique et aux Energies Alternatives, 75015 Paris (FR)
(72) Inventeur: PHAN, Hai Trieu, 38054 GRENOBLE Cedex 09 (FR); ASTE, Fabio, 73000 CHAMBERY (FR)
(74) Mandataire: Hautier IP

(56) Documents cités:
- EP-A1- 3 236 178
- EP-A1- 3 540 334
- CN-B- 106 091 474

## Description

### DOMAINE TECHNIQUE

La présente invention concerne le domaine des machines à absorption. Elle trouve pour application particulièrement avantageuse le domaine des machines à absorption ammoniac-eau pour la production de froid et/ou de chaud.

### ETAT DE LA TECHNIQUE

Dans un contexte environnemental toujours plus délicat d'un point de vue énergétique, la valorisation de la chaleur industrielle et l'optimisation des consommations du résidentiel sont des passages clé de la transition écologique. Les politiques énergétiques actuelles poussent dans cette direction et soulignent l'importance de la gestion des échanges thermiques, soit froids soit chauds, dans les immeubles, les bâtiments industriels et même dans les zones rurales.

Il existe diverses solutions technologiques dont plusieurs se basant sur les principes de la thermodynamique.

Par exemple, la machine à absorption eau-ammoniac est une technologie intéressante, particulièrement grâce à son principe de fonctionnement, qui permet de réaliser un circuit frigorifique ou de pompe à chaleur en utilisant comme source de la chaleur à moyenne-haute température au lieu de l'énergie électrique. En effet, cette dernière source est précieuse et coûteuse, alors que la chaleur peut être gratuite (solaire) ou résultante comme rejet d'un procédé industriel.

Ainsi, une machine à absorption peut facilement être couplée à des systèmes solaires thermiques, des réseaux de chaleur, des usines industrielles qui nécessitent du froid négatif et même des générateurs électriques turbo-gaz de grosse puissance.

Toutefois, les systèmes à architecture avancée, par exemple de type échangeur de chaleur générateur-absorbeur, en anglais Generator-Absorber heat eXchanger (GAX) rencontrent des freins à leur déploiement et les machines à architecture standard atteignent déjà leur limite de performance. Pour offrir une alternative viable industriellement et économiquement les besoins suivants doivent faire l'objet d'améliorations: améliorer la performance, baisser le coût et augmenter l'amplitude des conditions opérationnelles.

Le document EP 3540334 A1 divulgue une machine à absorption selon le préambule de la revendication 1.

Un objet de la présente invention est donc de proposer une machine à absorption, simple et performante capable de concilier les nécessités techniques et économiques

Les autres objets, caractéristiques et avantages de la présente invention apparaîtront à l'examen de la description suivante et des dessins d'accompagnement. Il est entendu que d'autres avantages peuvent être incorporés.

### RESUME

Selon la présente invention, l'objectif mentionné ci-dessus est résolu par une machine à absorption comprenant les caractéristiques de la revendication 1. Les formes de réalisation préférés sont définis dans les revendications dépendantes.
- Dans la première configuration, la machine est configurée pour refroidir un fluide caloporteur extérieur circulant dans l'évaporateur ;
- Dans la deuxième configuration, un fluide caloporteur extérieur circulant dans l'absorbeur et un fluide caloporteur extérieur circulant dans le condenseur forment un seul et même fluide caloporteur extérieur, désigné fluide caloporteur extérieur commun, la machine étant alors configurée pour augmenter la température dudit fluide caloporteur extérieur commun.

L'utilisation astucieuse de bouteilles de séparation en combinaison avec les autres organes de la machine permet une réduction de l'encombrement des machines classiques et une maintenance facilitée.

Cela permet de disposer d'une machine à absorption permettant une double fonction : une fonction frigorifique et une fonction de pompe à chaleur.

Comme avantage, cette solution permet de réduire l'encombrement des machines classiques.

De plus, cela permet de faciliter l'inspection, la substitution et la maintenance des pièces de la machine.

Cela permet aussi d'atteindre des coefficients de performance plus élevés que l'art antérieur.

La présente solution concerne aussi une machine à absorption comprenant un mélange en circulation dans un circuit, la machine comprenant principalement un premier et un deuxième fluides, la machine présentant une première configuration dans laquelle la machine produit du froid et une deuxième configuration dans laquelle la machine produit de la chaleur, ledit mélange en circulation présentant une concentration massique en deuxième fluide variant en fonction de sa position dans le circuit de sorte à définir pour le mélange en circulation, en fonction de la position, une solution dite pauvre, une solution dite condensée, une solution dite riche, et une solution dite réfrigérante, ladite machine comprenant au moins :
- Un absorbeur comprenant une entrée de la solution pauvre, la solution pauvre présentant une première température, une sortie de la solution riche, la solution riche présentant une deuxième température inférieure à la première température, une entrée d'un premier fluide caloporteur extérieur, et une sortie du premier fluide caloporteur extérieur, l'absorbeur étant configuré pour faire interagir thermiquement la solution pauvre et le premier fluide caloporteur extérieur de sorte à transformer la solution pauvre en solution riche, de préférence de sorte à diminuer la température de la solution pauvre, avantageusement de manière à augmenter le taux de concentration massique du deuxième fluide la transformant ainsi en solution riche ;
- Un premier dispositif d'échange thermique comprenant une entrée de la solution riche, une entrée de la solution pauvre, une sortie de la solution riche et une sortie de la solution pauvre,
   le premier dispositif d'échange thermique étant configuré pour faire interagir thermiquement la solution riche avec la solution pauvre de sorte à modifier, de préférence à augmenter, la température de la solution riche,
   l'entrée de la solution riche du premier dispositif d'échange thermique étant fluidiquement connectée, de préférence directement, à la sortie de la solution riche de l'absorbeur, et
   la sortie de la solution pauvre du premier dispositif d'échange thermique étant fluidiquement connectée, de préférence directement, à l'entrée de la solution pauvre de l'absorbeur ;
- Une première bouteille de séparation comprenant une entrée de la solution riche, une entrée de la solution réfrigérante, une sortie de la solution pauvre et une sortie de la solution réfrigérante,
   la première bouteille de séparation étant configurée pour séparer la solution riche en une partie liquide et en une partie gazeuse, la partie gazeuse étant destinée à alimenter la solution réfrigérante et la partie liquide formant la solution pauvre, l'entrée de la solution riche de la première bouteille de séparation étant fluidiquement connectée, de préférence directement, à la sortie de la solution riche du premier dispositif d'échange thermique ;
- Une deuxième bouteille de séparation comprenant une entrée de la solution réfrigérante, une sortie de la solution réfrigérante et une sortie de la solution réfrigérante,
   la deuxième bouteille de séparation étant configurée pour extraire en partie au moins la solution condensée depuis la solution réfrigérante,
   l'entrée de la solution réfrigérante de la deuxième bouteille de séparation étant fluidiquement connectée, de préférence directement, à la sortie de la solution réfrigérante de la première bouteille de séparation ;
- Un générateur de chaleur comprenant une entrée de la solution pauvre, une sortie de la solution pauvre,
   le générateur de chaleur étant configuré pour faire interagir thermiquement la solution pauvre et un deuxième fluide caloporteur extérieur, de préférence de sorte à augmenter la température de la solution pauvre,
   L'entrée de la solution pauvre du générateur de chaleur étant fluidiquement connectée, de préférence directement, à la sortie de la solution pauvre de la première bouteille de séparation et à la sortie de la solution condensée de la deuxième bouteille de séparation,
   La solution pauvre et la solution condensée étant mélangées au niveau de l'entrée de la solution pauvre du générateur de chaleur ;
- Une troisième bouteille de séparation comprenant une entrée de la solution pauvre, une sortie de la solution pauvre et une sortie de la solution réfrigérante,
   la troisième bouteille de séparation étant configurée pour séparer la solution pauvre en une partie liquide et en une partie gazeuse, la partie gazeuse formant la solution réfrigérante et la partie liquide formant la solution pauvre,
   l'entrée de la solution pauvre de la troisième bouteille de séparation étant fluidiquement connectée, de préférence directement, à la sortie de la solution pauvre du générateur de chaleur,
   la sortie de la solution pauvre de la troisième bouteille de séparation étant fluidiquement connectée, de préférence directement, à l'entrée de la solution pauvre du premier dispositif d'échange thermique,
   la sortie de la solution réfrigérante de la troisième bouteille de séparation étant fluidiquement connectée, de préférence directement, à l'entrée de la solution réfrigérante de la première bouteille de séparation ;
- Un condenseur comprenant une entrée de la solution réfrigérante, une entrée d'un troisième fluide caloporteur extérieur, une sortie de la solution réfrigérante et une sortie du troisième fluide caloporteur extérieur,
   le condenseur étant configuré pour faire interagir thermiquement la solution réfrigérante et le troisième fluide caloporteur extérieur de sorte à condenser la solution réfrigérante,
   L'entrée de la solution réfrigérante du condenseur étant fluidiquement connectée, de préférence directement, à la sortie de la solution réfrigérante de la deuxième bouteille de séparation ;
- Un évaporateur comprenant une entrée de la solution réfrigérante, une sortie de la solution réfrigérante,
   l'évaporateur étant configuré pour faire interagir thermiquement la solution réfrigérante et un quatrième fluide caloporteur extérieur de sorte à modifier la température du quatrième fluide caloporteur extérieur via l'évaporation d'une partie au moins de la solution réfrigérante, de préférence à diminuer la température du quatrième fluide caloporteur extérieur via l'évaporation d'une partie au moins de la solution réfrigérante,
   l'entrée de la solution réfrigérante de l'évaporateur étant fluidiquement connectée, de préférence directement, à la sortie de la solution réfrigérante du condenseur,
   la sortie de la solution réfrigérante de l'évaporateur étant fluidiquement connectée, de préférence directement, à l'entrée de la solution pauvre du premier dispositif d'échange thermique,
   la solution pauvre et la solution réfrigérante étant mélangées au niveau de l'entrée de la solution pauvre du premier dispositif d'échange thermique ;

Et dans laquelle :
- Dans la première configuration, la machine est configurée pour refroidir le quatrième fluide caloporteur extérieur ;
- Dans la deuxième configuration, le premier fluide caloporteur extérieur et le troisième fluide caloporteur extérieur forment un seul et même fluide caloporteur extérieur, désigné fluide caloporteur extérieur commun, de sorte à ce que respectivement la sortie du premier fluide caloporteur extérieur de l'absorbeur ou l'entrée du premier fluide caloporteur extérieur de l'absorbeur soit fluidiquement connectée, de préférence directement, respectivement à l'entrée du troisième fluide caloporteur extérieur du condenseur ou la sortie du troisième fluide caloporteur extérieur du condenseur, la machine étant alors configurée pour augmenter la température dudit fluide caloporteur extérieur commun.

La présente solution concerne aussi une machine à absorption comprenant un mélange en circulation comprenant principalement un premier et un deuxième fluides, la machine présentant une première configuration dans laquelle la machine produit du froid et une deuxième configuration dans laquelle la machine produit de la chaleur, ledit mélange en circulation présentant une concentration massique en deuxième fluide variant en fonction de sa position dans ladite machine de sorte à définir pour le mélange en circulation, en fonction de la position, une solution dite pauvre, une solution dite condensée, une solution dite riche, et une solution dite réfrigérante, ladite machine comprenant au moins comprenant au moins :
- Un absorbeur configuré pour faire interagir thermiquement la solution pauvre et un premier fluide caloporteur extérieur de sorte à enrichir en deuxième fluide la solution pauvre;
- Un premier dispositif d'échange thermique étant configuré pour faire interagir thermiquement la solution riche avec la solution pauvre de sorte à augmenter la température de la solution riche, le premier dispositif d'échange thermique étant fluidiquement disposé en entrée de l'absorbeur relativement à la solution pauvre, et en sortie de l'absorbeur relativement à la solution riche,
- Un générateur de chaleur configuré pour faire interagir thermiquement la solution pauvre et un deuxième fluide caloporteur extérieur de sorte à augmenter la température de la solution pauvre,
- Une première bouteille de séparation configurée pour séparer la solution riche en une partie liquide et en une partie gazeuse, la partie gazeuse étant destinée à alimenter la solution réfrigérante et la partie liquide formant la solution pauvre, la première bouteille de séparation étant située en sortie du premier dispositif d'échange thermique relativement à l'écoulement de la solution riche et en entrée du générateur de chaleur relativement à la solution pauvre,
- Une deuxième bouteille de séparation configurée pour extraire en partie au moins la solution condensée depuis la solution réfrigérante, la deuxième bouteille de séparation étant située en sortie de la première bouteille de séparation relativement à la solution réfrigérante,
- Une troisième bouteille de séparation configurée pour séparer la solution pauvre en une partie liquide et en une partie gazeuse, la partie gazeuse formant la solution réfrigérante et la partie liquide formant la solution pauvre, la troisième bouteille de séparation étant située en sortie du générateur de chaleur relativement à la solution pauvre, en entrée du premier dispositif d'échange thermique relativement à la solution pauvre, et en entrée de la première bouteille de séparation relativement à la solution réfrigérante,
- Un condenseur configuré pour faire interagir thermiquement la solution réfrigérante et un troisième fluide caloporteur extérieur de sorte à condenser la solution réfrigérante, le condenseur étant située en sortie de la deuxième bouteille de séparation relativement à la solution réfrigérante,
- Un évaporateur configuré pour faire interagir thermiquement la solution réfrigérante et un quatrième fluide caloporteur extérieur de sorte à diminuer la température du quatrième fluide caloporteur extérieur via l'évaporation d'une partie au moins de la solution réfrigérante, l'évaporateur étant situé en sortie du condenseur relativement à la solution réfrigérante et en entrée du premier dispositif d'échange thermique relativement à la solution pauvre,

Et dans laquelle :
- Dans la première configuration, la machine est configurée pour refroidir le quatrième fluide caloporteur extérieur ;
- Dans la deuxième configuration, le premier fluide caloporteur extérieur et le troisième fluide caloporteur extérieur forment un seul et même fluide caloporteur extérieur, dit fluide caloporteur extérieur commun, la machine étant alors configurée pour augmenter la température dudit fluide caloporteur extérieur commun.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente un schéma d'un mode de réalisation selon la présente invention d'une machine à absorption dans une configuration frigorifique.
La figure 2 représente un schéma d'un mode de réalisation selon la présente invention d'une machine à absorption dans une configuration de pompe à chaleur.
La figure 3 représente un schéma d'un mode de réalisation selon la présente invention d'un premier dispositif d'échange thermique.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions ne sont pas représentatives de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, le premier fluide comprend de l'eau et/ou un solvant comme le nitrate de lithium ou le thio-cyanate de sodium, et le deuxième fluide comprend de l'ammoniac ou de l'alcool.

Selon un exemple, la solution pauvre présente un premier taux de concentration massique du deuxième fluide, et la solution condensée présente un deuxième taux de concentration massique du deuxième fluide, et la solution riche présente un troisième taux de concentration massique du deuxième fluide, et la solution réfrigérante présente un quatrième taux de concentration massique du deuxième fluide, le premier taux de concentration, le deuxième taux de concentration, le troisième taux de concentration et le quatrième taux de concentration étant chacun différent les uns des autres.

Selon un exemple, le premier taux de concentration massique du deuxième fluide est inférieur au deuxième taux de concentration massique du deuxième fluide, et le premier taux de concentration massique du deuxième fluide et le troisième taux de concentration massique du deuxième fluide sont inférieurs au quatrième taux de concentration massique du deuxième fluide.

Selon un exemple, l'absorbeur comprend :
- une entrée de la solution pauvre, la solution pauvre présentant une première température,
- une sortie de la solution riche, la solution riche présentant une deuxième température inférieure à la première température,
- une entrée d'un premier fluide caloporteur extérieur, et
- une sortie du premier fluide caloporteur extérieur,
l'absorbeur étant configuré pour faire interagir thermiquement la solution pauvre et le premier fluide caloporteur extérieur de sorte à transformer la solution pauvre en solution riche, de préférence de sorte à diminuer la température de la solution pauvre, avantageusement de manière à augmenter le taux de concentration massique du deuxième fluide la transformant ainsi en solution riche.

Selon un exemple, le premier dispositif d'échange thermique comprend :
- une entrée de la solution riche,
- une entrée de la solution pauvre,
- une sortie de la solution riche et
- une sortie de la solution pauvre,
   le premier dispositif d'échange thermique étant configuré pour faire interagir thermiquement la solution riche avec la solution pauvre de sorte à modifier, de préférence à augmenter, la température de la solution riche,
   l'entrée de la solution riche du premier dispositif d'échange thermique étant fluidiquement connectée, de préférence directement, à la sortie de la solution riche de l'absorbeur, et
   la sortie de la solution pauvre du premier dispositif d'échange thermique étant fluidiquement connectée, de préférence directement, à l'entrée de la solution pauvre de l'absorbeur.

Selon un exemple, la première bouteille de séparation comprend :
- une entrée de la solution riche,
- une entrée de la solution réfrigérante,
- une sortie de la solution pauvre et
- une sortie de la solution réfrigérante,
   la première bouteille de séparation étant configurée pour séparer la solution riche en une partie liquide et en une partie gazeuse, la partie gazeuse étant destinée à alimenter la solution réfrigérante et la partie liquide formant la solution pauvre,
   l'entrée de la solution riche de la première bouteille de séparation étant fluidiquement connectée, de préférence directement, à la sortie de la solution riche du premier dispositif d'échange thermique.

Selon un exemple, la deuxième bouteille de séparation comprend :
- une entrée de la solution réfrigérante,
- une sortie de la solution réfrigérante et
- une sortie de la solution réfrigérante,
l'entrée de la solution réfrigérante de la deuxième bouteille de séparation étant fluidiquement connectée, de préférence directement, à la sortie de la solution réfrigérante de la première bouteille de séparation.

Selon un exemple, le générateur de chaleur comprend :
- une entrée de la solution pauvre,
- une sortie de la solution pauvre,
   le générateur de chaleur étant configuré pour faire interagir thermiquement la solution pauvre et un deuxième fluide caloporteur extérieur, de préférence de sorte à augmenter la température de la solution pauvre,
   l'entrée de la solution pauvre du générateur de chaleur étant fluidiquement connectée, de préférence directement, à la sortie de la solution pauvre de la première bouteille de séparation et à la sortie de la solution condensée de la deuxième bouteille de séparation,
   la solution pauvre et la solution condensée étant mélangées au niveau de l'entrée de la solution pauvre du générateur de chaleur.

Selon un exemple, la troisième bouteille de séparation comprend :
- une entrée de la solution pauvre,
- une sortie de la solution pauvre et
- une sortie de la solution réfrigérante,
   l'entrée de la solution pauvre de la troisième bouteille de séparation étant fluidiquement connectée, de préférence directement, à la sortie de la solution pauvre du générateur de chaleur,
   la sortie de la solution pauvre de la troisième bouteille de séparation étant fluidiquement connectée, de préférence directement, à l'entrée de la solution pauvre du premier dispositif d'échange thermique,
   la sortie de la solution réfrigérante de la troisième bouteille de séparation étant fluidiquement connectée, de préférence directement, à l'entrée de la solution réfrigérante de la première bouteille de séparation.

Selon un exemple, le condenseur comprend :
- une entrée de la solution réfrigérante,
- une entrée d'un troisième fluide caloporteur extérieur,
- une sortie de la solution réfrigérante et
- une sortie du troisième fluide caloporteur extérieur,
   le condenseur étant configuré pour faire interagir thermiquement la solution réfrigérante et le troisième fluide caloporteur extérieur de sorte à condenser la solution réfrigérante,
   L'entrée de la solution réfrigérante du condenseur étant fluidiquement connectée, de préférence directement, à la sortie de la solution réfrigérante de la deuxième bouteille de séparation.

Selon un exemple, l'évaporateur comprend :
- une entrée de la solution réfrigérante,
- une sortie de la solution réfrigérante,
   l'évaporateur étant configuré pour faire interagir thermiquement la solution réfrigérante et un quatrième fluide caloporteur extérieur de sorte à modifier la température du quatrième fluide caloporteur extérieur via l'évaporation d'une partie au moins de la solution réfrigérante, de préférence à diminuer la température du quatrième fluide caloporteur extérieur via l'évaporation d'une partie au moins de la solution réfrigérante,
   l'entrée de la solution réfrigérante de l'évaporateur étant fluidiquement connectée, de préférence directement, à la sortie de la solution réfrigérante du condenseur,
   la sortie de la solution réfrigérante de l'évaporateur étant fluidiquement connectée, de préférence directement, à l'entrée de la solution pauvre du premier dispositif d'échange thermique,
   La solution pauvre et la solution réfrigérante étant mélangées au niveau de l'entrée de la solution pauvre du premier dispositif d'échange thermique.

Selon un exemple, dans la première configuration, la machine est configurée pour refroidir le quatrième fluide caloporteur extérieur.

Selon un exemple, dans la deuxième configuration, le premier fluide caloporteur extérieur et le troisième fluide caloporteur extérieur forment un seul et même fluide caloporteur extérieur commun de sorte à ce que respectivement la sortie du premier fluide caloporteur extérieur de l'absorbeur ou l'entrée du premier fluide caloporteur extérieur de l'absorbeur soit fluidiquement connectée, de préférence directement, respectivement à l'entrée du troisième fluide caloporteur extérieur du condenseur ou la sortie du troisième fluide caloporteur extérieur du condenseur, la machine étant alors configurée pour augmenter la température dudit fluide caloporteur extérieur commun.

Selon un exemple, au moins l'un parmi l'absorbeur, le premier dispositif d'échange thermique, le générateur de chaleur, le condenseur, l'évaporateur comprend au moins un échangeur thermique à plaques.

Cela permet de réduire l'encombrement des machines à absorption de l'art antérieur.

Cela permet de réduire les coûts de fabrication des machines à absorption de l'art antérieur.

Cela permet une maintenance plus simple.

Selon un exemple, l'absorbeur, le premier dispositif d'échange thermique, le générateur de chaleur, le condenseur et l'évaporateur comprennent chacun au moins un échangeur thermique à plaques.

Cela permet de réduire l'encombrement des machines à absorption de l'art antérieur.

Cela permet de réduire les coûts de fabrication des machines à absorption de l'art antérieur.

Cela permet une maintenance plus simple.

Selon un exemple, l'échangeur thermique à plaques est configuré pour que les fluides le traversant circulent en contre-courant les uns relativement aux autres.

Cela permet d'améliorer les échanges thermiques.

Selon un exemple, la machine comprend un deuxième dispositif d'échange thermique comprenant :
- une entrée de la solution riche,
- une entrée de la solution pauvre,
- une sortie de la solution riche,
- une sortie de la solution pauvre,
   le deuxième dispositif d'échange thermique configuré pour faire interagir thermiquement la solution riche avec la solution pauvre, de préférence pour faire augmenter la température de la solution riche et pour faire diminuer la température de la solution pauvre,
   l'entrée de la solution riche du deuxième dispositif d'échange thermique étant fluidiquement connectée, de préférence directement, avec la sortie de la solution riche du première dispositif d'échange thermique,
   la sortie de la solution riche du deuxième dispositif d'échange thermique étant fluidiquement connectée, de préférence directement, à l'entrée de la solution riche de la première bouteille de séparation,
   l'entrée de la solution pauvre du deuxième dispositif d'échange thermique étant fluidiquement connectée, de préférence directement, avec la sortie de la solution pauvre de la troisième bouteille de séparation,
   la sortie de la solution pauvre du deuxième dispositif d'échange thermique étant fluidiquement connectée, de préférence directement, avec l'entrée de la solution pauvre du premier dispositif d'échange thermique.
Cela permet de réchauffer la solution riche et de refroidir la solution pauvre.

Selon un exemple, le deuxième dispositif d'échange thermique comprend au moins un échangeur thermique à plaques.
Cela permet de réduire l'encombrement des machines à absorption de l'art antérieur.
Cela permet de réduire les coûts de fabrication des machines à absorption de l'art antérieur.
Cela permet une maintenance plus simple.

Selon un exemple, la solution pauvre et la solution riche circulent à contre-courant dans l'échangeur thermique à plaques du deuxième dispositif d'échange thermique.
Cela permet d'améliorer les échanges thermiques.

Selon un exemple, la machine comprend un troisième dispositif d'échange thermique comprenant :
- une entrée principale de la solution réfrigérante,
- une sortie principale de la solution réfrigérante,
- une entrée secondaire de la solution riche,
- une sortie secondaire de la solution riche,
- une entrée additionnelle d'un cinquième fluide caloporteur extérieur,
- une sortie additionnelle du cinquième fluide caloporteur extérieur,
   le troisième dispositif d'échange thermique étant configuré pour faire interagir thermiquement la solution réfrigérante avec la solution riche de manière à augmenter la température de la solution riche, et la solution réfrigérante avec un cinquième fluide caloporteur extérieur de manière à diminuer la température de la solution réfrigérante,
   l'entrée principale de la solution réfrigérante du troisième dispositif d'échange thermique étant fluidiquement connectée, de préférence directement, à la sortie de la solution réfrigérante de la première bouteille de séparation,
   la sortie principale de la solution réfrigérante du troisième dispositif d'échange thermique étant fluidiquement connectée, de préférence directement, à l'entrée de la solution réfrigérante 140 de la deuxième bouteille de séparation,
   l'entrée secondaire de la solution riche du troisième dispositif d'échange thermique étant fluidiquement connectée, de préférence directement, à la sortie de la solution riche du premier dispositif d'échange thermique,
   la sortie secondaire de la solution riche du troisième dispositif d'échange thermique étant fluidiquement connectée, de préférence directement, à l'entrée de la solution riche de la première bouteille de séparation.
Cela permet de réchauffer la solution riche.
Cela permet de refroidir la solution réfrigérante.

Selon un exemple, le troisième dispositif d'échange thermique comprend au moins un échangeur thermique à plaques.
Cela permet de réduire l'encombrement des machines à absorption de l'art antérieur.
Cela permet de réduire les coûts de fabrication des machines à absorption de l'art antérieur.
Cela permet une maintenance plus simple.

Selon un exemple, la solution réfrigérante et la solution riche circulent à contre-courant dans l'échangeur thermique à plaques du troisième dispositif d'échange thermique.
Cela permet d'améliorer les échanges thermiques.

Selon un exemple, la sortie secondaire de la solution riche du troisième dispositif d'échange thermique est fluidiquement connectée, de préférence directement, à l'entrée de la solution riche du deuxième dispositif d'échange thermique.
Cela permet de réchauffer la solution riche.

Selon un exemple, la machine comprend un quatrième dispositif d'échange thermique comprenant ;
- une entrée principale de la solution réfrigérante,
- une sortie principale de la solution réfrigérante,
- une entrée secondaire de la solution réfrigérante, et
- une sortie secondaire de la solution réfrigérante,
   le quatrième dispositif d'échange thermique étant configuré pour faire interagir thermiquement la solution réfrigérante avec elle-même avant son entrée dans l'évaporateur et après sa sortie de l'évaporateur,
   l'entrée principale de la solution réfrigérante du quatrième dispositif d'échange thermique étant fluidiquement connectée, de préférence directement, à la sortie de la solution réfrigérante du condenseur,
   la sortie principale de la solution réfrigérante du quatrième dispositif d'échange thermique étant fluidiquement connectée, de préférence directement, à l'entrée principale de la solution réfrigérante de l'évaporateur,
   l'entrée secondaire de la solution réfrigérante du quatrième dispositif d'échange thermique étant fluidiquement connectée, de préférence directement, à la sortie principale de la solution réfrigérante de l'évaporateur,
   la sortie secondaire de la solution réfrigérante du quatrième dispositif d'échange thermique étant fluidiquement connectée, de préférence directement, à l'entrée de la solution pauvre du premier dispositif d'échange thermique.
Cela permet de refroidir la solution réfrigérante en direction de l'évaporateur.
Cela permet de réchauffer la solution réfrigérante en provenance de l'évaporateur.

Selon un exemple, le quatrième dispositif d'échange thermique comprend au moins un échangeur thermique à plaques.
Cela permet de réduire l'encombrement des machines à absorption de l'art antérieur.
Cela permet de réduire les coûts de fabrication des machines à absorption de l'art antérieur.
Cela permet une maintenance plus simple.

Selon un exemple, la solution pauvre sortant du condenseur et la solution pauvre sortant de l'évaporateur circulent à contre-courant dans l'échangeur thermique à plaques du quatrième dispositif d'échange thermique.
Cela permet d'améliorer les échanges thermiques.

Selon un exemple, la machine comprend au moins un dispositif d'augmentation de pression de la solution réfrigérante fluidiquement connecté entre la sortie de la solution réfrigérante de l'évaporateur et l'entrée de la solution pauvre du premier dispositif d'échange thermique, de sorte à augmenter la pression du mélange de la solution pauvre avec la solution réfrigérante dans le premier dispositif d'échange thermique, de préférence dans l'absorbeur.
Cela permet d'améliorer le COP.

Selon un exemple, la machine comprend au moins une première valve d'expansion comprenant :
- une entrée de la solution pauvre et
- une sortie de la solution pauvre,
   la première valve d'expansion étant configurée pour modifier la température de la solution pauvre, de préférence pour modifier la température de la solution pauvre par une détente isenthalpique,
   l'entrée de la solution pauvre de la valve d'expansion étant fluidiquement connectée, de préférence directement, à la sortie de la solution pauvre de la troisième bouteille de séparation.

Selon un exemple, l'entrée de la solution pauvre de la première valve d'expansion est fluidiquement connectée, de préférence directement, la sortie de la solution pauvre du deuxième dispositif d'échange thermique.

Selon un exemple, la machine comprend au moins une deuxième valve d'expansion comprenant :
- une entrée de la solution réfrigérante et
- une sortie de la solution réfrigérante,
   la deuxième valve d'expansion étant configurée pour modifier la température de la solution réfrigérante, de préférence pour modifier la température de la solution réfrigérante par une détente isenthalpique,
   l'entrée de la solution réfrigérante de la deuxième valve d'expansion étant fluidiquement connectée, de préférence directement, à la sortie de la solution réfrigérante du condenseur, de préférence à la sortie de la solution réfrigérante du quatrième dispositif d'échange thermique,
   la sortie de la solution réfrigérante étant fluidiquement connectée, de préférence directement, à l'entrée principale de la solution réfrigérante de l'évaporateur.

Selon un exemple, l'entrée de la solution réfrigérante de la deuxième valve d'expansion est fluidiquement connectée, de préférence directement, la sortie principale de la solution réfrigérante du quatrième dispositif d'échange thermique.

Selon un exemple, la machine comprend au moins une pompe à solution comprenant :
- une entrée de la solution riche, et
- une sortie de la solution riche,
   la pompe à solution étant configurée pour modifier la pression de la solution riche, de préférence pour augmenter la pression de la solution riche,
   l'entrée de la solution riche de la pompe à solution étant fluidiquement connectée, de préférence directement, à la sortie de la solution riche de l'absorbeur, et
   la sortie de la solution riche de la pompe à solution étant fluidiquement connectée, de préférence directement, à l'entrée de la solution riche du premier dispositif d'échange thermique.

Il est précisé que dans le cadre de la présente invention, l'expression « A fluidiquement connecté à B » ou encore « A fluidiquement raccordé à B » est synonyme de « A est en connexion fluidique avec B » et ne signifie pas nécessairement qu'il n'existe pas d'organe entre A et B. Ainsi ces expressions s'entendent d'une connexion fluidique entre deux éléments, cette connexion pouvant ou non être directe, cela signifie qu'il est possible qu'entre un premier dispositif et un deuxième dispositif qui sont fluidiquement connectés, un parcours d'un fluide existe, ce parcours pouvant ou non comprendre d'autres dispositifs.

A l'inverse, dans le cadre de la présente invention, le terme «fluidiquement connecté directement» s'entend d'une connexion fluidique directe entre deux éléments. Cela signifie qu'entre un premier dispositif et un deuxième dispositif qui sont fluidiquement connectés directement aucun autre organe n'est présent, autre qu'un conduit ou plusieurs conduits.

Il est précisé que dans le cadre de la présente invention, le terme « fluidiquement disposé » s'entend d'un positionnement d'un dispositif sur le parcours d'un fluide.

La présente solution concerne ainsi une machine à absorption apte à délivrer de la chaleur et du froid en fonction de sa configuration. En particulier, la présente invention permet de réaliser au moins un cycle thermodynamique d'absorption de type GAX tout en présentant des avantages à la fois en termes de performances mais également de coût et d'encombrement.

En effet, contrairement à l'art antérieur qui utilise des dispositifs encombrants et verticaux, en particulier des colonnes pour le GAX par exemple qui s'étendent principalement selon la verticale, la présente solution utilise une technologie beaucoup plus modulaire et s'affranchit des contraintes des solutions connues.

Ainsi, la présente solution se propose de déstructurer les traditionnelles colonnes du générateur et de l'absorbeur. La nouvelle structure permet d'atteindre les mêmes objectifs thermodynamiques à savoir produire la vapeur d'une solution concentrée dite réfrigérant nécessaire dans la partie dite frigorifique de la machine. Pour atteindre cet objectif, les échangeurs thermiques mis en jeux sont conçus de manière astucieuse et sont disposés les uns par rapport aux autres de manière optimisée.

De manière surprenante, l'utilisation astucieuse de bouteilles de séparation a permis la suppression des colonnes verticales encombrantes, tout en assurant une fonction de sélection des phases liquide ou gazeuse tout au long du cycle.

Dans le cadre du développement de la présente invention, il était attendu que les performances soient fortement dégradées. Toutefois, cette modification structurelle entraine également des modifications dans la dynamique d'une machine à absorption, ces modifications impliquent alors un positionnement astucieux et optimisé des bouteilles de séparation afin d'obtenir un cycle d'absorption thermodynamique performant, c'est-à-dire pour maximiser la récupération de chaleur.

On notera également qu'un avantage de la présente solution est que la machine à absorption est capable de présenter deux configurations, l'une en pompe à chaleur et l'autre en réfrigération avec des COP intéressants. Chacune de ces deux configurations présente un coefficient de performance (COP) intéressant.

On notera que dans l'art antérieur, les machines à absorption, également appelée machine du type GAX utilisent toujours des colonnes pour le générateur et l'absorbeur. La présente invention permet :
- De réduire l'encombrement grâce à des éléments plus petits et à la possibilité de les disposer d'une façon optimale ;
- De faciliter l'inspection et la substitution des pièces de la machine ;
- De réduire les coûts globaux grâce à une mise en oeuvre aisée et un coût réduit des échangeurs à plaques ;
- Une meilleure récupération grâce à la récupération de la chaleur en cours de cycle.

On notera également qu'en configuration de pompe de chaleur, la présente invention permet :
- D'atteindre des températures élevée du fluide caloporteur en sortie ;
- De récupérer la chaleur de manière optimisée en cours du cycle ;
- D'atteindre des coefficients de performance plus élevés que l'art antérieur.

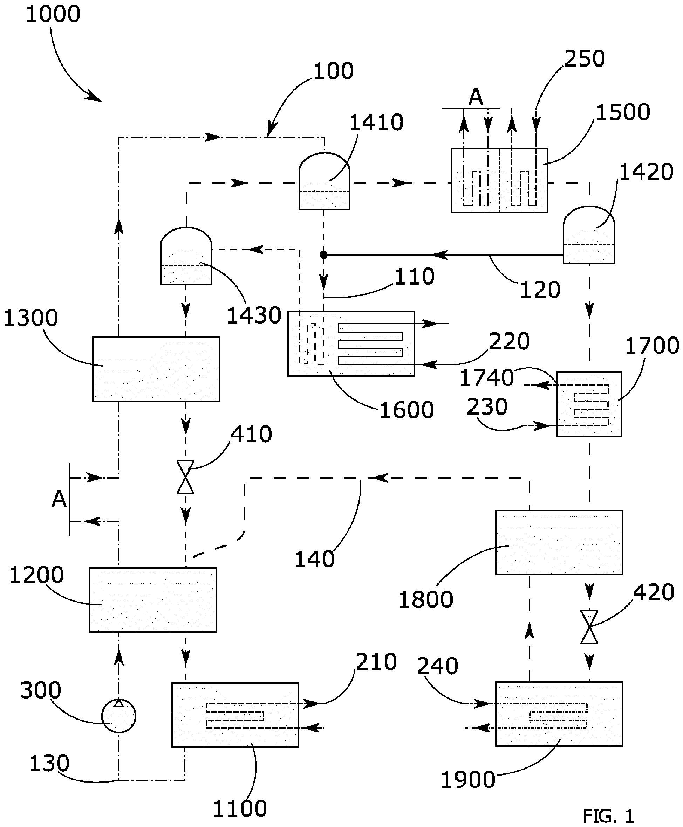

Nous allons à présente décrire la présente machine à absorption selon un exemple de réalisation non limitatif, au travers des figures 1 à 3.

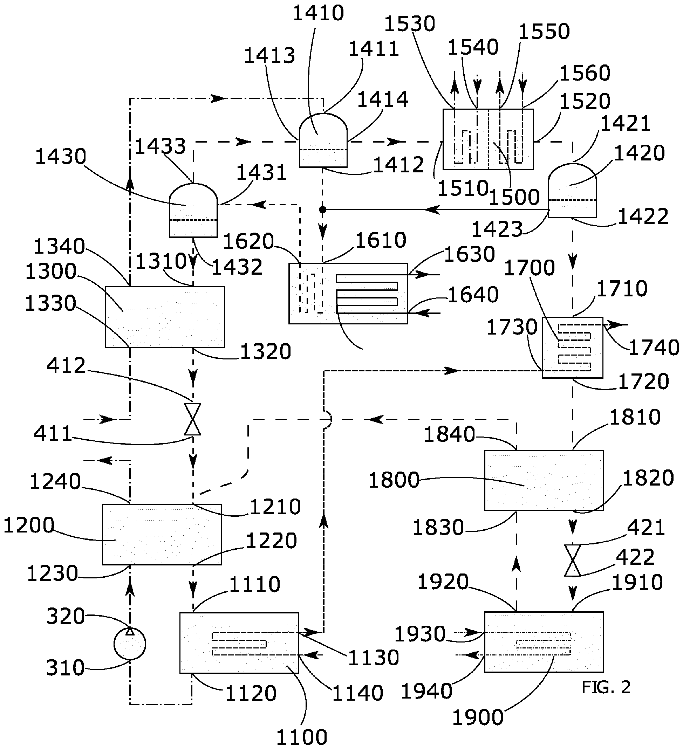

En particulier, la figure 1 représente la présente machine 1000 dans une configuration apte à générer du froid, alors que la figure 2, elle, représente une configuration apte à générer de la chaleur.

On notera que le fluide caloporteur extérieur de l'absorbeur 1100 et du condenseur 1700 sont différents dans le cas de la configuration frigorifique, alors qu'ils forment avantageusement un seul et même fluide caloporteur extérieur dans le cas de la configuration en pompe à chaleur.

Selon un mode de réalisation, la machine à absorption comprend un mélange en circulation 100 dans un circuit. Ce mélange en circulation 100 comprend avantageusement au moins un premier fluide et un deuxième fluide. Ce premier fluide peut être pris avantageusement parmi au moins : de l'eau, ou un solvant comme le lithium nitrate ou le thio-cyanate de sodium, ou encore un mélange d'eau et nitrate de lithium. Ce deuxième fluide peut être de préférence pris parmi au moins : de l'ammoniaque, ou de l'alcool.

Selon un mode de réalisation, la proportion massique du premier fluide est comprise entre 30% et 70%, de préférence entre 40% et 60%, et avantageusement entre 45% et 55%.

Selon un mode de réalisation, la proportion massique du deuxième fluide est comprise entre 30% et 70%, de préférence entre 40% et 60%, et avantageusement entre 45% et 55%.

De manière astucieuse, la concentration du deuxième fluide dans le mélange 100 en circulation est variable durant la circulation dudit mélange 100 dans la machine 1000.

En effet, et tel que décrit par la suite, le mélange 100 en circulation présente avantageusement différents taux de concentration du deuxième fluide dans le premier fluide en fonction de sa circulation dans ladite machine 1000.

Ainsi, le mélange 100 en circulation peut présenter un premier taux de concentration du deuxième fluide sous la forme d'une solution pauvre 110. De préférence, la solution pauvre 110 contient ainsi très peu du deuxième fluide. De préférence, la solution condensée 110 est une solution diphasique. Avantageusement, la solution pauvre 110 comprend une partie liquide et une partie gazeuse. De préférence, la partie liquide comprend en grande partie le premier fluide. De préférence, la partie gazeuse comprend en grande partie le deuxième fluide. Selon un mode de réalisation, la solution pauvre 110 comprend une concentration massique en deuxième fluide inférieure à 70%, de préférence à 60% et avantageusement à 50%.

Le mélange 100 en circulation peut aussi présenter un deuxième taux de concentration du deuxième fluide sous la forme d'une solution condensée 120. Cette solution condensée 120 est de préférence monophasique. Cette solution condensée 120 est avantageusement liquide. Selon un mode de réalisation, la solution condensée 120 présente une concentration massique en deuxième fluide supérieure à la concentration massique en deuxième fluide de la solution pauvre 110. De manière avantageuse, la solution condensée 120 comprend une concentration massique en deuxième fluide comprise entre 50% et 90%, de préférence entre 50% et 80%, et avantageusement entre 60% et 75%.

Le mélange 100 en circulation peut également présenter un troisième taux de concentration du deuxième fluide sous la forme d'une solution riche 130. De préférence, la solution riche 130 est principalement liquide et comprend en grande partie le premier fluide et le deuxième fluide. Selon un mode de réalisation, la solution riche 130 peut présenter une partie gazeuse en un ou plusieurs points du circuit de circulation de la machine 1000, de préférence lors de son passage ou en sortie du premier dispositif d'échange thermique 1200. Selon un mode de réalisation, la solution riche 130 comprend un taux de concentration massique en deuxième fluide différent du taux de concentration massique en deuxième fluide de la solution pauvre 110. De manière avantageuse, la solution riche 130 comprend une concentration massique en deuxième fluide comprise entre 30% et 80%, de préférence entre 40% et 70%, et avantageusement entre 45% et 65%.

Le mélange 100 en circulation peut en outre présenter, un quatrième taux de concentration du deuxième fluide sous la forme d'une solution réfrigérante 140. De préférence, la solution réfrigérante 140 comprend principalement le deuxième fluide. Avantageusement, la solution réfrigérante 140 peut présenter un état gazeux et/ou liquide. Selon un mode de réalisation, la solution réfrigérante 140 présente une concentration massique en deuxième fluide supérieure à la concentration massique en deuxième fluide de la solution riche 130. Selon un mode de réalisation, la solution réfrigérante 140 comprend une concentration massique en deuxième fluide supérieure à 90%, de préférence à 96% et avantageusement à 98%.

Dans la présente description, on considère une haute température comme étant la température maximale que peut atteindre le mélange 100 lors d'un cycle thermodynamique mis en oeuvre par la machine 1000. De préférence, cette haute température est supérieure à 130°C, avantageusement à 160°C.

Dans la présente description, on considère une haute pression comme étant la pression maximale que peut atteindre le mélange 100 lors d'un cycle thermodynamique mis en oeuvre par la machine 1000. De préférence, cette haute pression est supérieure à 20bar, avantageusement à 25bar.

Dans la présente description, on considère une basse température comme étant la température minimale que peut atteindre le mélange 100 lors d'un cycle thermodynamique mis en oeuvre par la machine 1000. De préférence, cette basse température est inférieure à -15°C, avantageusement à -35°C.

Dans la présente description, on considère une basse pression comme étant la pression minimale que peut atteindre le mélange 100 lors d'un cycle thermodynamique mis en oeuvre par la machine 1000. De préférence, la basse pression est inférieure à 5bar, avantageusement à 1bar.

De manière avantageuse, la machine 1000 présente une première configuration et une deuxième configuration. Dans la première configuration, illustrée par la figure 1 par exemple non limitatif, la machine 1000 est configurée pour produire du froid. Cette production de froid est de préférence réalisée au moyen de la diminution de la température d'un fluide caloporteur extérieur. Dans la deuxième configuration, illustrée par la figure 2 par exemple non limitatif, la machine 1000 est configurée pour produire de la chaleur. Cette production de chaleur est de préférence réalisée au moyen de l'augmentation de la température d'un fluide caloporteur extérieur.

Tel que décrit par la suite et aux travers des figures 1 à 3, selon un mode de réalisation, la machine 1000 comprend au moins :
- Un absorbeur 1100 ;
- Un premier dispositif d'échange thermique 1200 ;
- Une pluralité de bouteilles de séparation 1410, 1420 et 1430 ;
- Un générateur de chaleur 1600 ;
- Un condenseur 1700 ;
- Un évaporateur 1900 ;
- De préférence, un deuxième dispositif d'échange thermique 1300 ;
- De préférence, un troisième dispositif d'échange thermique 1500 ;
- De préférence, un quatrième dispositif d'échange thermique 1800 ;
- De préférence, une pluralité de valves d'expansion 410 et 420 ;
- De préférence, au moins une pompe à solution 300.

Tel que décrit par la suite, la présente invention permet de réduire l'encombrement des classiques machine à absorption de l'art antérieur. Elle permet également de réduire les coûts de fabrication et d'installation. Et enfin, elle permet une facilité accrue de maintenance et de remplacement des pièces.

Selon un mode de réalisation, l'absorbeur 1100 comprend au moins :
- une entrée 1110 de la solution pauvre 110, la solution pauvre 110 présentant une première température,
- une sortie 1120 de la solution riche 130, la solution riche 130 présentant une deuxième température inférieure à la première température,
- une entrée 1130 d'un premier fluide caloporteur extérieur 210, et
- une sortie 1140 du premier fluide caloporteur extérieur 210.

Avantageusement, l'entrée 1110 de la solution pauvre 110 de l'absorbeur 1100 est fluidiquement connectée, de préférence directement, à une sortie 1220 de la solution pauvre 110 du premier dispositif d'échange thermique 1200.

De préférence, la sortie 1120 de la solution riche 130 de l'absorbeur 1100 est fluidiquement connectée, de préférence directement, à une entrée 1230 de la solution riche 130 du premier dispositif d'échange thermique 120.

Selon un mode de réalisation, et tel que décrit par la suite, une pompe à solution 300 peut être disposée entre la sortie 1120 de la solution riche 130 de l'absorbeur 1100 et l'entrée 1230 de la solution riche 130 du premier dispositif d'échange thermique 1200.

De manière astucieuse, l'absorbeur 1100 est configuré pour faire interagir thermiquement la solution pauvre 110 et le premier fluide caloporteur extérieur 210. Cela permet de transformer la solution pauvre 110 en solution riche 130. En effet, cela permet de diminuer la température de la solution pauvre 110. Cette diminution de la température permet alors d'augmenter le taux de concentration massique du deuxième fluide. La solution pauvre 110 se transforme alors en solution riche 130.

De manière avantageuse, l'absorbeur 1100 permet de générer une réaction exothermique en permettant à la solution pauvre 110 d'absorber le deuxième fluide, se transformant ainsi en solution riche 130. Ainsi, on notera que dans l'absorbeur 1100, l'échange thermique entre la solution pauvre 110 et le premier fluide caloporteur extérieur 210 est du type diphasique-liquide. En effet, la solution pauvre 110 est dans un état diphasique lorsqu'elle pénètre dans l'absorbeur 1100.

En particulier, la quantité du deuxième fluide absorbé est directement liée au rendement d'absorption se produisant dans l'absorbeur 1100. Par exemple, la solution riche 130 en sortie de l'absorbeur 1100 présente une concentration massique en deuxième fluide 1,5 fois supérieure, de préférence 3 fois supérieurs à la concentration massique en deuxième fluide de la solution pauvre 110 en entrée de l'absorbeur 1100.

En sortie de l'absorbeur 1100, la solution riche 130 est donc plus froide que la solution pauvre 110 en entrée, une partie de cette chaleur ayant été cédée au premier fluide caloporteur extérieur 210. Ainsi le premier fluide caloporteur extérieur 210 entre dans l'absorbeur 1100 à une température inférieure à celle avec laquelle il ressort de l'absorbeur 1100.

Selon un mode de réalisation préféré, l'absorbeur 1100 comprend un échangeur thermique à plaques.

Selon un mode de réalisation astucieux, la machine 1000 comprend un dispositif d'augmentation de pression étant apte à modifier la pression du mélange en circulation 100 dans l'absorbeur 1100 de manière à augmenter la concentration massique en deuxième fluide de la solution riche 130 lors de la transformation de la solution pauvre 110 en solution riche 130. Ce dispositif d'augmentation de pression peut par exemple être disposé en entrée de l'absorbeur 1100, voire en entrée du premier dispositif d'échange thermique 1200, voir en sortie du quatrième dispositif d'échange thermique 1800, selon le sens de circulation de la solution pauvre et/ou de la solution réfrigérante 140. Ce dispositif d'augmentation de pression pourrait par exemple être un compresseur ou bien encore un éjecteur, à titre d'exemple non limitatif. De préférence, ce dispositif d'augmentation de pression est disposé entre la sortie secondaire 1840 de la solution réfrigérante du quatrième dispositif d'échange thermique 1800 et l'entrée 1210 de la solution pauvre du premier dispositif d'échange thermique 1200. Cela permet d'avoir une solution plus chaude en entrée du premier dispositif d'échange thermique 1200. Cela permet également d'avoir une pression plus importante dans l'absorbeur 1100. Cela permet aussi de ne pas perturber la solution pauvre avant sa phase de détente isenthalpique produite par la première valve d'expansion 410. Cela permet alors d'améliorer le COP.

Selon un mode de réalisation, la pluralité de bouteilles de séparation comprend une première bouteille de séparation, une deuxième bouteille de séparation et une troisième bouteille de séparation.

Selon un mode de réalisation, et tel qu'illustré en figures 1, 2 et 3, le premier dispositif d'échange thermique 1200 comprend au moins :
- une entrée 1230 de la solution riche 130,
- une entrée 1210 de la solution pauvre 110,
- une sortie 1240 de la solution riche 130 et
- une sortie 1220 de la solution pauvre 110,

De manière avantageuse, l'entrée 1230 de la solution riche 130 du premier dispositif d'échange thermique est fluidiquement connectée, de préférence directement, à la sortie 1120 de la solution riche 130 de l'absorbeur 1100.

De préférence, la sortie 1220 de la solution pauvre 110 est fluidiquement connectée, de préférence directement, à l'entrée 1110 de la solution pauvre 110 de l'absorbeur 1100.

Avantageusement, l'entrée 1210 de la solution pauvre 110 est fluidiquement connectée à une sortie 1432 de la solution pauvre 110 d'une bouteille de séparation 1430 de la pluralité de bouteilles de séparation.

Selon un mode de réalisation, un deuxième dispositif d'échange thermique 1300 est disposé entre l'entrée 1210 de la solution pauvre 110 du premier dispositif d'échange thermique 1200 et la sortie 1432 de la solution pauvre 110 de ladite bouteille de séparation 1430 de la pluralité de bouteilles de séparation.

Selon un mode de réalisation, une première valve d'expansion 410 de la pluralité de valves d'expansion peut être disposée fluidiquement entre l'entrée 1210 de la solution pauvre 110 du premier dispositif d'échange thermique 1200 et la sortie 1432 de ladite bouteille de séparation 1430 de la pluralité de bouteilles de séparation relativement à la circulation de la solution pauvre 110. De préférence, ladite première valve d'expansion 410 de la pluralité de valves d'expansion peut être disposée entre la sortie 1320 de la solution pauvre 110 du deuxième dispositif d'échange thermique 1300 et l'entrée 1210 de la solution pauvre 110 du premier dispositif d'échange thermique 1200 relativement à la circulation de la solution pauvre 110.

Selon un mode de réalisation, l'entrée 1210 de la solution pauvre 110 du premier dispositif d'échange thermique 1200 permet un mélange entre la solution pauvre 110 et la solution réfrigérante 140.

De préférence, le premier dispositif d'échange thermique 1200 est configuré pour faire interagir thermiquement la solution riche 130 avec la solution pauvre 110. Cette interaction thermique est destinée à modifier la température de la solution riche 130, et avantageusement de la solution pauvre 110. En particulier, et de manière avantageuse, le premier dispositif d'échange thermique 1200 est configuré pour augmenter la température de la solution riche 130. De préférence, le premier dispositif d'échange thermique 1200 est configuré pour diminuer la température de la solution pauvre 110.

Avantageusement, le premier dispositif d'échange thermique 1200 est configuré pour recevoir la solution riche 130, de préférence à une première température et à une première pression. Cette première température est de préférence dite froide, et avantageusement est inférieure à la température de la solution pauvre 110 en entrée du premier dispositif d'échange thermique 1200. Cette première pression est une haute pression, et avantageusement est supérieure à la pression de la solution pauvre 110 en entrée du premier dispositif d'échange thermique 1200. Le premier dispositif d'échange thermique 1200 est avantageusement configuré pour recevoir la solution pauvre 110 et de préférence un mélange de la solution pauvre 110 et de la solution réfrigérante 140.

De manière avantageuse, le mélange de la solution pauvre 110 et de la solution réfrigérante 140 est un mélange diphasique comprenant une phase liquide et une phase gazeuse. Ce mélange est à une pression inférieure à la pression de la solution riche 130 en entrée dans le premier dispositif d'échange thermique. De manière astucieuse, la solution riche 130 et la solution pauvre 110, et de préférence ledit mélange, se déplacent dans le premier dispositif d'échange thermique à contre-courant. En particulier, la solution pauvre 110 et la solution réfrigérante 140 sont en co-courant alors que la solution riche 130 est à contre-courant par rapport à la solution pauvre 110 et à la solution réfrigérante 140.

De manière avantageuse, le transfert thermique depuis la solution pauvre 110 et la solution réfrigérante 140 mélangées vers la solution riche 130 est possible via l'utilisation d'échangeur thermique à plaques. On notera que de manière astucieuse, l'absorption générée par la rencontre de la solution pauvre 110 avec la solution réfrigérée 140 est une réaction exothermique. Cela permet d'améliorer le transfert thermique depuis le mélange de la solution pauvre 110 et de la solution réfrigérante 140 vers la solution riche 130.

Ainsi la solution riche 130 sort du premier dispositif d'échange thermique 1200 à une température supérieure à celle à laquelle elle est entrée dans le premier dispositif d'échange thermique 1200.

La solution pauvre 110 mélangée à la solution réfrigérante 140 sort du premier dispositif d'échange thermique 1200 à une température inférieure à la température à laquelle elle est entrée dans le premier dispositif d'échange thermique 1200.

Selon un mode de réalisation préféré, le premier dispositif d'échange thermique 1200 comprend un échangeur thermique à plaques.

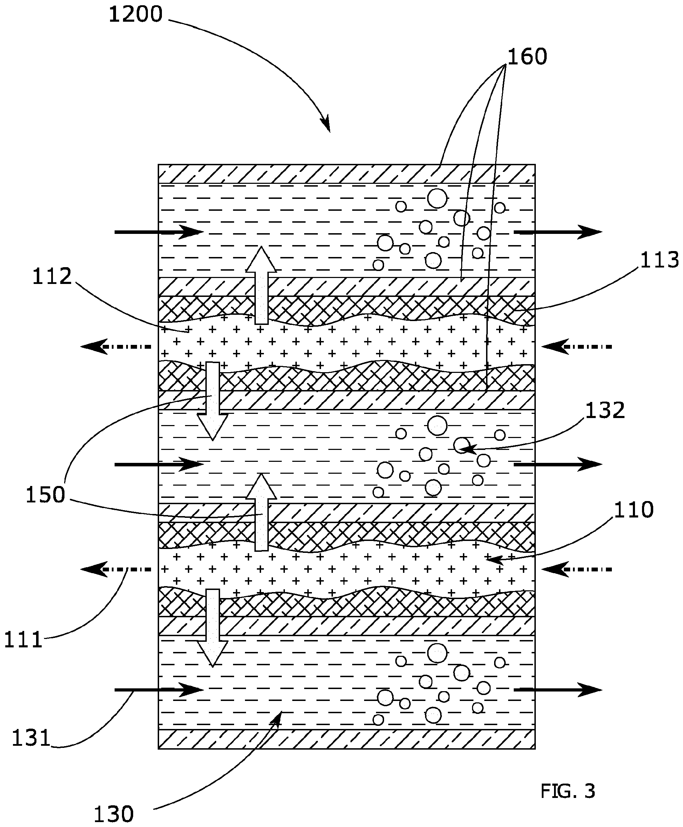

La figure 3 illustre schématiquement un échangeur thermique à plaques du premier dispositif d'échange thermique 1200. Cette échangeur à plaques comprend des plaques 160 séparant deux circuits de circulation de fluides, de préférence en contre-courant, cela afin d'améliorer les échanges thermiques 150. De manière avantageuse, sur cette figure on retrouve la solution riche 130 et son sens de circulation 131 dans cet échangeur à plaques. On notera également la présence de la solution pauvre 110 et de son sens de circulation 111 dans cet échangeur à plaques. Tel que précédemment indiqué la solution pauvre 111 peut être mélangée avec la solution réfrigérante 140 avant son entrée dans le premier dispositif d'échange thermique 1200. Ainsi, on retrouve ici une solution pauvre 110 présentant un état diphasique. La solution pauvre 110 comprend alors une phase liquide 113 et une phase gazeuse 112, ladite phase gazeuse 112 étant formée par la solution réfrigérante 140 à l'état de vapeur. Lors de la circulation de la solution riche 130 et de la solution pauvre 110 dans cet échangeur à plaques, des échanges thermiques 150 se produisent via les plaques 160 de l'échangeur à plaques. Ces échanges thermiques 150 permettent une augmentation de la solution riche rendant celle-ci partiellement diphasique et permettant ainsi l'apparition d'une phase gazeuse 132 dans la solution riche 130.

On retrouve alors une absorption de la vapeur du réfrigérant dans la phase liquide de la solution pauvre 110 dans la partie basse pression du premier dispositif d'échange thermique 1200. Et de manière parallèle, on retrouve une évaporation d'une partie au moins de la solution riche 130, en particulier d'une partie au moins du deuxième fluide de la solution riche 130 dans la partie haute pression du premier dispositif d'échange thermique 1200.

Selon un mode de réalisation, l'absorbeur 1100 et le premier dispositif d'échange thermique 1200 peuvent former un seul et même élément de la machine.

Selon un mode de réalisation, le premier dispositif d'échange thermique 1200 peut être configuré pour que la solution pauvre 110 soit en contre-courant avec la solution réfrigérante 140 ou à semi-contre-courant avec la solution réfrigérante 140. Cela permet d'améliorer l'absorption. Cela permet aussi d'améliorer le transfert thermique entre ledit mélange et la solution riche 130.

Selon un mode de réalisation, l'utilisation d'un ou de plusieurs échangeurs thermiques à plaques configurés pour que la phase gazeuse 112 et la phase liquide 113 circulent en contre-courant l'une relativement à l'autre permet une amélioration du transfert thermique et de l'absorption. En effet, si la phase gazeuse 112, c'est-à-dire la solution réfrigérante 140, est injectée en contre-courant par rapport à la phase liquide 113, c'est-à-dire à la solution pauvre 110, alors l'absorption du deuxième fluide est améliorée tout comme le transfert thermique entre la solution réfrigérante 140 et la solution pauvre 110 et la solution riche 130. Selon ce mode de réalisation, l'échangeur à plaques peut comprendre un ou des injecteurs au fond de chaque canal de circulation de la solution pauvre 110, c'est-à-dire dans les canaux à basse pression.

Selon un mode de réalisation, la pluralité de bouteilles de séparation comprend au moins une première bouteille de séparation 1410. Cette première bouteille de séparation 1410 comprend au moins :
- une entrée 1411 de la solution riche 130,
- une entrée 1413 de la solution réfrigérante 140,
- une sortie 1412 de la solution pauvre 110 et
- une sortie 1414 de la solution réfrigérante 110,

Avantageusement, l'entrée 1411 de la solution riche 130 est fluidiquement connectée, de préférence directement, à la sortie 1240 de la solution riche 130 du premier dispositif d'échange thermique 1200. Selon un mode de réalisation, le deuxième dispositif d'échange thermique 1300 est fluidiquement disposé entre le premier dispositif d'échange thermique 1200 et la première bouteille de séparation 1410 relativement à la circulation de solution riche 130. En particulier, selon ce mode de réalisation, la sortie 1340 de la solution riche 130 du deuxième dispositif d'échange thermique 1300 est fluidiquement connectée, de préférence directement, à l'entrée 1411 de la solution riche 130 de la première bouteille de séparation 1410.

De préférence, l'entrée 1413 de la solution réfrigérante 140 de la première bouteille de séparation 1410 est fluidiquement connectée, de préférence directement, à une troisième bouteille de séparation 1430 de la pluralité de bouteille de séparation, de préférence à la sortie 1433 de la solution réfrigérante 140 de la troisième bouteille de séparation 1430.

De manière avantageuse, la sortie 1412 de la solution pauvre 110 est fluidiquement connectée, de préférence directement, au générateur de chaleur 1600, en particulier à une entrée 1610 de la solution pauvre 110 du générateur de chaleur 1600.

De préférence, la sortie 1414 de la solution réfrigérante 140 est fluidiquement connectée, de préférence directement, à une deuxième bouteille de séparation 1420, en particulier à une entrée 1421 de la solution réfrigérante 140 de la deuxième bouteille de séparation 1420.

De manière astucieuse, la première bouteille de séparation 1410 est configurée pour que lorsque la solution riche 130 pénètre dans la première bouteille de séparation 1410, la première bouteille de séparation 1410 sépare alors la partie liquide et la partie gazeuse de la solution riche 130. En effet à ce stade, la solution riche 130 est dans un état diphasique. De préférence, la partie gazeuse de la solution riche 130 est séparée pour alimenter la solution réfrigérante 140, la partie liquide restante formant alors la solution pauvre 110. De plus, la première bouteille de séparation 1410 permet la récupération de la chaleur depuis la solution réfrigérante 140 entrante vers la solution pauvre 110 sortante.

Selon un mode de réalisation, la solution pauvre 110 en sortie de la première bouteille de séparation 1410 présente une concentration massique en deuxième fluide 10% inférieure, de préférence 30% inférieure à la concentration massique en deuxième fluide de la solution riche 130 en entrée de la première bouteille de séparation 1410.

Selon un mode de réalisation, le troisième dispositif d'échange thermique 1500 est disposé fluidiquement entre la première bouteille de séparation 1410 et la deuxième bouteille de séparation 1420 relativement à la solution réfrigérante 140. Plus particulièrement, la sortie 1414 de la solution réfrigérante 140 de la première bouteille 1414 est fluidiquement connectée, de préférence directement, à une entrée 1510 de la solution réfrigérante 140 du troisième dispositif d'échange thermique 1500. Et l'entrée 1421 de la solution réfrigérante 140 de la deuxième bouteille de séparation 1420 est de préférence fluidiquement connectée, de préférence directement, à une sortie 1520 de la solution réfrigérante 140 du troisième dispositif d'échange thermique 1500.

Avantageusement, la première bouteille de séparation 1410 est configurée pour faire interagir thermiquement la solution riche 130 avec la solution réfrigérante 140 de sorte à transformer la solution riche 130 en solution pauvre 110, de préférence de sorte à réduire le taux de concentration massique du deuxième fluide dans la solution riche 130 de manière à obtenir la solution pauvre 110.

De manière avantageuse, l'utilisation d'une ou de plusieurs bouteilles de séparation permet de se libérer d'utilisation classique de la colonne du générateur appelé GAX utilisé dans l'art antérieur et présentant une complexité de montage et un encombrement conséquent.

De préférence, la solution riche 130 est dans un état diphasique lorsqu'elle pénètre dans la première bouteille de séparation 1410, c'est-à-dire qu'elle comprend une portion liquide et une portion gazeuse. Lorsque la solution riche 130 pénètre dans la première bouteille de séparation 1410, elle est mélangée à une vapeur saturée présente avec la solution réfrigérante 140 en sortie de la troisième bouteille de séparation 1430. La solution réfrigérante 140 est de préférence à haute température en sortie de la troisième bouteille de séparation 1430. Ainsi, une partie de la chaleur de cette vapeur, dite saturée, est transférée à la solution riche 130. Ce mélange entraine une évaporation. Ce mélange entraine alors la séparation de la solution riche 130 en deux phases résultant en la solution pauvre 110 qui est de préférence diphasique.

De manière avantageuse, la première bouteille de séparation 1410 permet la suppression de la colonne du générateur présent dans les solutions de l'art antérieur.

Selon un mode de réalisation, la première bouteille de séparation comprend un réservoir pressurisé qui permet une bonne séparation de phase et/ou un échange thermique efficace entre les différentes solutions.

Selon un mode de réalisation, la pluralité de bouteilles de séparation comprend au moins une deuxième bouteille de séparation 1420. Cette deuxième bouteille de séparation 1420 comprend au moins :
- une entrée 1421 de la solution réfrigérante 140,
- une sortie 1422 de la solution réfrigérante 140 et
- une sortie 1423 de la solution condensée 140,

De manière avantageuse, l'entrée 1421 de la solution réfrigérante 140 est fluidiquement connectée, de préférence directement, à la sortie 1414 de la solution réfrigérante 140 de la première bouteille de séparation 1410. Selon un mode de réalisation, et tel que précédemment présenté, le troisième dispositif d'échange thermique 1500 peut être disposé fluidiquement entre la sortie 14141 de la solution réfrigérante 140 de la première bouteille de séparation 1410 et l'entrée 1421 de la solution réfrigérante 140 de la deuxième bouteille de séparation 1420.

De préférence, la sortie 1422 de la solution réfrigérante 140 est fluidiquement connectée, de préférence directement, au condenseur 1700, en particulier à une entrée 1710 de la solution réfrigérante 140 du condenseur 1700.

De manière avantageuse, la sortie 1423 de la solution condensée 120 est fluidiquement connectée, de préférence directement, à la sortie 1412 de la solution pauvre 110 de la première bouteille de séparation 1410 ou à l'entrée 1610 de la solution pauvre 110 du générateur de chaleur 1600 de sorte à être mélangé à la solution pauvre 110, de préférence avant de pénétrer dans le générateur de chaleur 1600.

De préférence, la deuxième bouteille de séparation 1420 est configurée pour extraire en partie au moins la solution condensée 120 depuis la solution réfrigérante 140.

De manière astucieuse, cette deuxième bouteille de séparation 1420 est configurée pour diviser la vapeur très riche en deuxième fluide de la partie liquide, cette partie liquide formant alors la solution réfrigérante 140.

La deuxième bouteille de séparation 1420 est de préférence configurée pour séparer la vapeur riche en premier fluide de la solution réfrigérante 140. Cette vapeur forme alors la solution condensée 120. Avantageusement, la solution condensée 120 est plus concentrée que la solution pauvre 110.

Selon un mode de réalisation, la sortie 1423 de la solution réfrigérante 140 de la deuxième bouteille de séparation est fluidiquement connectée, de préférence directement, à la première bouteille de séparation 1410, de préférence à une entrée de la solution réfrigérante 140 de la première bouteille de séparation 1410. Cela permet la récupération d'une partie au moins du premier fluide. Cela permet une amélioration des performances.

Selon un mode de réalisation, la pluralité de bouteilles de séparation comprend au moins une troisième bouteille de séparation 1430. Cette troisième bouteille de séparation 1430 comprend au moins :
- une entrée 1431 de la solution pauvre 110,
- une sortie 1432 de la solution pauvre 110 et
- une sortie 1433 de la solution réfrigérante 140,

De préférence, l'entrée 1431 de la solution pauvre 110 de la troisième bouteille de séparation 1430 est fluidiquement connectée, de préférence directement, à la sortie 1620 de la solution pauvre 110 du générateur de chaleur 1600.

Avantageusement, la sortie 1432 de la solution pauvre 110 de la troisième bouteille de séparation 1430 est fluidiquement connectée, de préférence directement, à l'entrée 1210 de la solution pauvre 110 du premier dispositif d'échange thermique 1200. Selon un mode de réalisation, le deuxième dispositif d'échange thermique 1300 est fluidiquement disposé entre la sortie 1432 de la solution pauvre 110 de la troisième bouteille de séparation 1430 et le premier dispositif d'échange thermique 1200. De préférence, le deuxième dispositif d'échange thermique 1300 est fluidiquement disposé entre la sortie 1432 de la solution pauvre 110 de la troisième bouteille de séparation 1430 et la première valve d'expansion 410.

De préférence, la sortie 1433 de la solution réfrigérante 140 de la troisième bouteille de séparation 1430 est fluidiquement connectée, de préférence directement, à l'entrée 1413 de la solution réfrigérante 140 de la première bouteille de séparation 1410.

De manière avantageuse, la troisième bouteille de séparation 1430 est configurée pour extraire en partie au moins la solution réfrigérante 140 depuis la solution pauvre 110, de préférence une fois sortie du générateur de chaleur 1600.

De manière astucieuse, la troisième bouteille de séparation 1430 permet la séparation de la phase vapeur et de la phase liquide de la Solution pauvre 110 sortant du générateur de chaleur 1600. En effet, en sortie du générateur de chaleur 1600, la solution pauvre 110 se trouve à haute pression et à haute température, c'est-à-dire à une température et à une pression supérieure à celle de la solution pauvre 110 pénétrant dans le générateur de chaleur 1600.

Dans cette nouvelle et innovante architecture de machine à absorption, cette deuxième bouteille de séparation 1420 permet de séparer les phases vapeur et liquide en sortie du générateur de chaleur 1600. Ainsi, l'ajout de cette troisième bouteille de séparation 1430 en sortie du générateur de chaleur 1600 permet de supprimer la traditionnelle et encombrante colonne des générateurs de chaleur de l'art antérieur.

Selon un mode de réalisation, cette troisième bouteille de séparation 1430 comprend un réservoir pressurisé. De préférence, la troisième bouteille de séparation 1430 est configurée pour fonctionner à haute pression et haute température.

Selon un mode de réalisation, la première bouteille de séparation 1410 et la troisième bouteille de séparation 1430 forme une seule et même bouteille de séparation assurant à elle seule les fonctions de la première bouteille de séparation 1410 et de la troisième bouteille de séparation 1430. Cela permet de simplifier la mise en oeuvre de la présente invention. Et cela permet aussi de réduire les coûts de fabrication et/ou d'installation.

Selon un mode de réalisation le générateur de chaleur 1600 comprend au moins :
- une entrée de la solution pauvre 110,
- une sortie de la solution pauvre 110,
- une entrée secondaire d'un deuxième fluide caloporteur extérieur 220 et
- une sortie secondaire du deuxième fluide caloporteur extérieur 220,

De préférence, l'entrée 1610 de la solution pauvre 110 du générateur de chaleur 1600 est fluidiquement connectée, de préférence directement, à la sortie 1412 de la solution pauvre 110 de la première bouteille de séparation 1410. De préférence, l'entrée 1610 de la solution pauvre 110 du générateur de chaleur 1600 est également fluidiquement connectée, de préférence directement, à la sortie 1423 de la solution condensée 120 de la deuxième bouteille de séparation 1420.

Avantageusement, la sortie 1620 de la solution pauvre 110 du générateur de chaleur est fluidiquement connectée, de préférence directement, à l'entrée 1431 de la solution pauvre 110 de la troisième bouteille de séparation 1430.

De manière astucieuse, la solution pauvre 110 et la solution condensée 120 sont mélangées à l'entrée 1610 de la solution pauvre 110 du générateur de chaleur 1600.

De préférence, le générateur de chaleur 1600 est configuré pour faire interagir thermiquement la solution pauvre 110 et le deuxième fluide caloporteur extérieur 220, de préférence de sorte à augmenter la température de la solution pauvre 110. Cette augmentation de la température de la solution pauvre 110 est destinée à faire atteindre à la solution pauvre 110 la haute température.

Avantageusement, le générateur de chaleur 1600 comprend un échangeur thermique à plaques. Cet échangeur à plaque est configuré pour fonctionner en contre-courant. C'est-à-dire que la solution pauvre 110 circule dans un sens dans l'échangeur à plaque et que le deuxième fluide caloporteur extérieur 220 circule en sens contraire. Cette circulation en contre-courant augmente l'efficacité du transfert thermique. De manière avantageuse, le générateur de chaleur 1600 est configuré pour fonctionner à haute pression, c'est-à-dire à une pression supérieure à 30bar. De même, le générateur de chaleur 1600 est avantageusement configuré pour chauffer la solution pauvre 110 à haute température, c'est-à-dire à une température jusqu'à 200°C.

Selon un mode de réalisation, le condenseur 1700 comprend :
- une entrée principale 1710 de la solution réfrigérante 140,
- une entrée secondaire 1730 d'un troisième fluide caloporteur extérieur 230,
- une sortie principale 1720 de la solution réfrigérante 140 et
- une sortie secondaire 1740 du troisième fluide caloporteur extérieur 230.

De préférence, l'entrée principale 1710 de la solution réfrigérante 140 du condenseur 1700 est fluidiquement connectée, de préférence directement, à la sortie 1422 de la solution réfrigérante 140 de la deuxième bouteille de séparation 1420.

Avantageusement, la sortie principale 1720 de la solution réfrigérante 140 du condenseur 1700 est fluidiquement connectée, de préférence directement, à l'entrée principale 1910 de l'évaporateur 1900. Selon un mode de réalisation, un quatrième dispositif d'échange thermique 1800 est disposé fluidiquement entre la sortie principale 1720 de la solution réfrigérante 140 du condenseur 1700 et l'entrée principale 1910 de l'évaporateur 1900.

De manière astucieuse, le condenseur 1700 est configuré pour faire interagir thermiquement la solution réfrigérante 140 et le troisième fluide caloporteur extérieur 230 de sorte à modifier la température de la solution réfrigérante 140, de préférence de sorte à diminuer la température de la solution réfrigérante 140.

De préférence, le condenseur 1700 comprend un échangeur thermique à plaque. Le condenseur 1700 est configuré pour utiliser le troisième fluide caloporteur extérieur 230 de manière à refroidir la solution réfrigérante 140 le traversant. Cela permet alors de liquéfier en partie au moins une partie de la solution réfrigérante 140. Avantageusement, le condenseur 1700 permet de fixer la valeur de la haute pression. En effet, la haute pression est avantageusement dépendante de la température minimale à laquelle la solution réfrigérante 140 est refroidie.

Selon un mode de réalisation, l'évaporateur 1900 comprend :
- une entrée principale 1910 de la solution réfrigérante 140,
- une entrée secondaire 1930 d'un quatrième fluide caloporteur extérieur 240,
- une sortie principale 1920 de la solution réfrigérante 140 et
- une sortie secondaire 1940 du quatrième fluide caloporteur extérieur 240,

De préférence, l'entrée principale 1910 de la solution réfrigérante 140 de l'évaporateur 1900 est fluidiquement connectée, de préférence directement, à la sortie principale 1720 de la solution réfrigérante 140 du condenseur 1700. Selon un mode de réalisation, le quatrième dispositif d'échange thermique 1800 est disposé fluidiquement entre la sortie principale 1720 de la solution réfrigérante 140 du condenseur 1700 et l'entrée principale 1910 de la solution réfrigérante 140 de l'évaporateur 1900.

De préférence, la sortie principale 1920 de la solution réfrigérante 140 de l'évaporateur 1900 est fluidiquement connectée, de préférence directement, à l'entrée 1210 de la solution pauvre 110 du premier dispositif d'échange thermique 1200. Selon un mode de réalisation, le quatrième dispositif d'échange thermique 1800 est disposé fluidiquement entre la sortie principale 1920 de la solution réfrigérante 140 de l'évaporateur 1900 et l'entrée 1210 de la solution pauvre 110 du premier dispositif d'échange thermique 1200.

Avantageusement, l'évaporateur 1900 est configuré pour faire interagir thermiquement la solution réfrigérante 140 et le quatrième fluide caloporteur extérieur 240, cela de manière à modifier la température du quatrième fluide caloporteur extérieur 240. Cette modification de température est possible via l'évaporation d'une partie au moins de la solution réfrigérante 140. Cela permet alors de diminuer la température du quatrième fluide caloporteur extérieur 240 via l'évaporation d'une partie au moins de la solution réfrigérante 140.

On notera que de manière avantageuse, la solution pauvre 110 provenant de la troisième bouteille de séparation 1430 et la solution réfrigérante 140 provenant de l'évaporateur 1900 sont mélangées en amont ou à l'entrée 1210 de la solution pauvre 110 du premier dispositif d'échange thermique 1200.

Selon un mode de réalisation, le deuxième dispositif d'échange thermique 1300 est disposé fluidiquement entre la troisième bouteille de séparation 1430 et le premier dispositif d'échange thermique 1200 relativement à la circulation de la solution pauvre 110. De préférence, le deuxième dispositif d'échange thermique 1300 est disposé fluidiquement entre la sortie 1432 de la solution pauvre 110 de la troisième bouteille de séparation 1430 et l'entrée 1210 de la solution pauvre 110 du premier dispositif d'échange thermique 1200 relativement à la circulation de la solution pauvre 110.

Selon un mode de réalisation, le deuxième dispositif d'échange thermique 1300 est disposé fluidiquement entre le premier dispositif d'échange thermique 1200 et la première bouteille de séparation 1410 relativement à la circulation de la solution riche 130. De préférence, le deuxième dispositif d'échange thermique 1300 est disposé fluidiquement entre la sortie 1240 de la solution riche 130 du premier dispositif d'échange thermique 1200 et l'entrée 1411 de la solution riche 130 de la première bouteille de séparation 1410 relativement à la circulation de la solution riche 130.

Selon un mode de réalisation, le deuxième dispositif d'échange thermique 1300 comprend au moins :
- une entrée 1330 de la solution riche 130,
- une entrée 1310 de la solution pauvre 110,
- une sortie 1340 de la solution riche 130,
- une sortie 1320 de la solution pauvre 110.

De préférence, l'entrée 1330 de la solution riche 130 du deuxième dispositif d'échange thermique 1300 est fluidiquement connectée, de préférence directement, avec la sortie 1240 de la solution riche 130 du première dispositif d'échange thermique 1200, avantageusement avec la sortie secondaire 1540 de la solution riche 130 du troisième dispositif d'échange thermique 1500 tel que décrit par la suite.

De préférence, la sortie 1340 de la solution riche 130 du deuxième dispositif d'échange thermique 1300 est fluidiquement connectée, de préférence directement, à l'entrée 1411 de la solution riche 130 de la première bouteille de séparation 1410.

De préférence, l'entrée 1310 de la solution pauvre 110 du deuxième dispositif d'échange thermique 1300 est fluidiquement connectée, de préférence directement, avec la sortie 1432 de la solution pauvre 110 de la troisième bouteille de séparation 1430.

De préférence, la sortie 1320 de la solution pauvre 110 du deuxième dispositif d'échange thermique 1300 est fluidiquement connectée, de préférence directement, avec l'entrée 1210 de la solution pauvre 110 du premier dispositif d'échange thermique 1200. Selon un mode de réalisation, la première valve d'expansion 410 est disposée fluidiquement entre la sortie 1320 de la solution pauvre 110 du deuxième dispositif d'échange thermique 1300 et l'entrée 1210 de la solution pauvre 110 du premier dispositif d'échange thermique 1200.

Avantageusement, le deuxième dispositif d'échange thermique 1300 est configuré pour faire interagir thermiquement la solution riche 130 avec la solution pauvre 110. De préférence, le deuxième dispositif d'échange thermique 1300 est configuré pour faire augmenter la température de la solution riche 130 et pour faire diminuer la température de la solution pauvre 110. Ainsi, le deuxième dispositif d'échange thermique 1300 permet le transfert thermique entre la solution pauvre 110 qui se trouve à haute température et la solution riche 130 qui se trouve à une température inférieure à la haute température. La solution riche 130 devient alors en partie au moins diphasique tout au long de son passage dans le deuxième dispositif d'échange thermique 1300. De manière astucieuse, les fluides en circulation dans le deuxième dispositif d'échange thermique 1300 sont en contre-courant. On notera que dans le deuxième dispositif d'échange thermique 1300, la solution riche 130 et la solution pauvre 110 sont de préférence à la même pression.

De manière avantageuse, le deuxième dispositif d'échange thermique 1300 comprend au moins un échangeur thermique à plaques. Selon un mode de réalisation, le deuxième dispositif d'échange thermique 1300 comprend au moins un échangeur thermique à plaques.

Selon un mode de réalisation, la solution pauvre 110, avant son entrée dans le générateur de chaleur 1600, peut être préchauffée par la solution pauvre 110 sortant de la troisième bouteille de séparation 1430, avant son passage dans le deuxième dispositif d'échange thermique 1300. Cela permet une meilleure récupération de la chaleur, de préférence à une valeur la plus haute possible. En effet, cet échange thermique se produit alors à une température élevée et présente des avantages en termes d'irréversibilité. En effet, de préférence, les températures impliquées dans cet échange thermique sont toutes les deux élevées, et relativement proches l'une de l'autre. Cela permet d'utiliser les températures en sortie de cet échange thermique pour réaliser d'autres échanges thermiques. En particulier, la température la plus froide reste suffisamment chaude pour être refroidie au moins une nouvelle fois lors d'un échange thermique à venir.

Selon un mode de réalisation, le troisième dispositif d'échange thermique 1500 est disposé fluidiquement entre le premier dispositif d'échange thermique 1200 et la première bouteille de séparation 1410 relativement à la circulation de la solution riche 130. De préférence, le troisième dispositif d'échange thermique 1500 est disposé fluidiquement entre la sortie 1240 de la solution riche 130 du premier dispositif d'échange thermique 1200 et l'entrée 1411 de la solution riche 130 de la première bouteille de séparation 1410 relativement à la circulation de la solution riche 130. Selon un mode de réalisation, le troisième dispositif d'échange thermique 1500 est disposé fluidiquement entre le première dispositif d'échange thermique 1200 et le deuxième dispositif d'échange thermique 1300 relativement à la circulation de la solution riche 130. De préférence, le troisième dispositif d'échange thermique 1500 est disposé fluidiquement entre la sortie 1240 de la solution riche 130 du premier dispositif d'échange thermique 1200 et l'entrée 1330 de la solution riche 130 du deuxième dispositif d'échange thermique 1300 relativement à la circulation de la solution riche 130.

Selon un mode de réalisation, le troisième dispositif d'échange thermique 1300 est disposé fluidiquement entre la première bouteille de séparation 1410 et la deuxième bouteille de séparation 1420 relativement à la circulation de la solution réfrigérante 140. De préférence, le troisième dispositif d'échange thermique 1500 est disposé entre la sortie 1414 de la solution réfrigérante 140 de la première bouteille de séparation 1410 et l'entrée 1421 de la solution réfrigérante 140 de la deuxième bouteille de séparation 1420 relativement à la circulation de la solution réfrigérante 140.

Selon un mode de réalisation, le troisième dispositif d'échange thermique comprend au moins :
- une entrée principale 1510 de la solution réfrigérante 140,
- une sortie principale 1520 de la solution réfrigérante 140,
- une entrée secondaire 1530 de la solution riche 130,
- une sortie secondaire 1540 de la solution riche 130,
- une entrée additionnelle 1550 d'un cinquième fluide caloporteur extérieur 250,
- une sortie additionnelle 1560 du cinquième fluide caloporteur extérieur 250.

De préférence, l'entrée principale 1510 de la solution réfrigérante 140 du troisième dispositif d'échange thermique 1500 est fluidiquement connectée, de préférence directement, à la sortie 1414 de la solution réfrigérante 140 de la première bouteille de séparation 1410.

De préférence, la sortie principale 1520 de la solution réfrigérante 140 du troisième dispositif d'échange thermique 1500 est fluidiquement connectée, de préférence directement, à l'entrée 1421 de la solution réfrigérante 140 de la deuxième bouteille de séparation 1420.

De préférence, l'entrée secondaire 1530 de la solution riche 130 du troisième dispositif d'échange thermique 1500 est fluidiquement connectée, de préférence directement, à la sortie 1240 de la solution riche 130 du premier dispositif d'échange thermique 1200.

De préférence, la sortie secondaire 1540 de la solution riche 130 du troisième dispositif d'échange thermique 1500 est fluidiquement connectée, de préférence directement, à l'entrée 1411 de la solution riche 130 de la première bouteille de séparation 1410. Selon un mode de réalisation, la sortie secondaire 1540 de la solution riche 130 du troisième dispositif d'échange thermique 1500 est fluidiquement connectée, de préférence directement, à l'entrée 1330 de la solution riche 130 du deuxième dispositif d'échange thermique 1300.

Avantageusement, le troisième dispositif d'échange thermique 1500 est configuré pour faire interagir thermiquement la solution réfrigérante 140 avec la solution riche 130. Cela permet alors d'augmenter la température de la solution riche 130 tout en refroidissant la solution réfrigérante 140.

Avantageusement, le troisième dispositif d'échange thermique 1500 est configuré pour faire interagir thermiquement la solution réfrigérante 140 avec le cinquième fluide caloporteur extérieur 250. Cela permet alors de refroidir la solution réfrigérante 140.

De manière astucieuse, le troisième dispositif d'échange thermique 1500 est configuré pour enrichir la partie liquide de la solution réfrigérante 140 en refroidissant principalement la partie gazeuse de la solution réfrigérante 140.

Selon un mode de réalisation, le troisième dispositif d'échange thermique 1500 comprend une première partie et une deuxième partie. La première partie comprend au moins un premier échangeur thermique configuré pour refroidir la solution réfrigérante 140 à partir de la solution riche 130. Ce premier échangeur thermique est de préférence un échangeur thermique à plaques. La deuxième partie comprend au moins un deuxième échangeur thermique configuré pour refroidir la solution réfrigérante 140 à partir du cinquième fluide caloporteur extérieur 250, de préférence se trouvant à température ambiante. Ce deuxième échangeur thermique 1500 est de préférence un échangeur thermique à plaques. Cela permet de récupérer de la chaleur au niveau de la solution réfrigérante 140 entre la première bouteille de séparation 1410 et la deuxième bouteille de séparation 1420. Cela permet de chauffer la solution riche 130 entre le premier dispositif d'échange thermique 1200 et la première bouteille de séparation 1410, de préférence entre le premier dispositif d'échange thermique 1200 et le deuxième dispositif d'échange thermique 1300.

Selon un mode de réalisation, le troisième dispositif d'échange thermique 1500 comprend au moins un échangeur thermique à plaques, de préférence deux échangeurs thermiques à plaques.

Selon un mode de réalisation, la deuxième partie du troisième dispositif d'échange thermique 1500 peut être supprimé, en particulier, si la machine 1000 est configurée pour que la température en sortie du troisième dispositif d'échange thermique soit plus élevée. Cela permet de réduire les coûts de fabrication de la Machine 1000 selon la présente invention.

Selon un mode de réalisation, le quatrième dispositif d'échange thermique 1800 est disposé fluidiquement entre le condenseur 1700 et l'évaporateur 1900 relativement à la circulation de la solution réfrigérante 140. De préférence, le quatrième dispositif d'échange thermique 1800 est disposé fluidiquement entre la sortie 1720 de la solution réfrigérante 140 du condenseur 1700 et l'entrée 1910 de la solution réfrigérante 140 de l'évaporateur 1900.

Selon un mode de réalisation, une deuxième valve d'expansion 420 est fluidiquement disposée entre le quatrième dispositif d'échange thermique 1800 et l'évaporateur 1900. De préférence, la deuxième valve d'expansion est fluidiquement disposée entre la sortie 1720 de la solution réfrigérante 140 du condenseur 1700 et l'entrée 1910 de la solution réfrigérante 140 de l'évaporateur 1900.

Selon un mode de réalisation, le quatrième dispositif d'échange thermique 1800 est disposé fluidiquement entre l'évaporateur 1900 et le premier dispositif d'échange thermique 1200 relativement à la circulation de la solution réfrigérante 140. De préférence, le quatrième dispositif d'échange thermique 1800 est disposé fluidiquement entre la sortie 1920 de la solution réfrigérante 140 de l'évaporateur 1900 et l'entrée 1210 de la solution réfrigérante 140 du premier dispositif d'échange thermique 1200.

Selon un mode de réalisation, le quatrième dispositif d'échange thermique 1800 comprend au moins :
- une entrée principale 1810 de la solution réfrigérante 140,
- une sortie principale 1820 de la solution réfrigérante 140,
- une entrée secondaire 1830 de la solution réfrigérante 140, et
- une sortie secondaire 1840 de la solution réfrigérante 140,

De préférence, l'entrée principale 1810 de la solution réfrigérante 140 du quatrième dispositif d'échange thermique 1800 est fluidiquement connectée, de préférence directement, à la sortie principale 1720 de la solution réfrigérante 140 du condenseur 1700.

De préférence, la sortie principale 1820 de la solution réfrigérante 140 du quatrième dispositif d'échange thermique 1800 est fluidiquement connectée, de préférence directement, à l'entrée 1910 de la solution réfrigérante 140 de l'évaporateur 1900. Selon un mode de réalisation, la sortie principale 1820 de la solution réfrigérante 140 du quatrième dispositif d'échange thermique 1800 est fluidiquement connectée, de préférence directement, à l'entrée 421 de la solution réfrigérante 140 de la deuxième valve d'expansion 420. Selon un mode de réalisation, la sortie 422 de la deuxième valve d'expansion 420 est fluidiquement connectée, de préférence directement, à l'entrée 1910 de la solution réfrigérante 140 de l'évaporateur 1900.

De préférence, l'entrée secondaire 1830 de la solution réfrigérante 140 du quatrième dispositif d'échange thermique 1800 est fluidiquement connectée, de préférence directement, avec la sortie 1920 de la solution réfrigérante 140 de l'évaporateur 1900.

De préférence, la sortie secondaire 1840 de la solution réfrigérante 140 du quatrième dispositif d'échange thermique 1800 est fluidiquement connectée, de préférence directement, à l'entrée 1210 de la solution pauvre 110 du premier dispositif d'échange thermique 1200.

Avantageusement, le quatrième dispositif d'échange thermique 1800 est configuré pour faire interagir thermiquement la solution réfrigérante 140 avant son entrée dans l'évaporateur 1900 avec la solution réfrigérante 140 après sa sortie de l'évaporateur 1900.

De manière astucieuse, le quatrième dispositif d'échange thermique 1800 est configuré pour refroidir la solution réfrigérante 140 avant que celle-ci ne pénètre dans l'évaporateur 1900, de préférence avant que celle-ci ne subisse une détente, de préférence isenthalpique, via la deuxième valve d'expansion 420. Cela permet d'optimiser, de préférence de maximiser, la chute thermique de la solution réfrigérante 140 avant qu'elle ne pénètre dans l'évaporateur 1900.

De manière avantageuse, le quatrième dispositif d'échange thermique 1800 permet d'améliorer l'évaporation de la solution réfrigérante 140 avant que celle-ci ne pénètre dans l'absorbeur 1100, de préférence dans le premier dispositif thermique 1200.

Selon un mode de réalisation, le quatrième dispositif d'échange thermique 1800 comprend au moins un échangeur thermique à plaques, de préférence uniquement des échangeurs thermiques à plaques.

Selon un mode de réalisation, la pluralité de valves d'expansion comprend au moins une première valve d'expansion 410 et une deuxième valve d'expansion 420 tel que précédemment décrit.

Selon un mode de réalisation, la première valve d'expansion 410 est fluidiquement disposée entre la troisième bouteille de séparation 1430 et le premier dispositif d'échange thermique 1200 relativement à la circulation de la solution pauvre 110. De préférence, la première valve d'expansion 410 est fluidiquement disposée entre le deuxième dispositif thermique 1300 et le premier dispositif d'échange thermique 1200 relativement à la circulation de la solution pauvre 110. Avantageusement, l'entrée 412 de la solution pauvre 110 de la première valve d'expansion 410 est fluidiquement connectée, de préférence directement, à la sortie 1320 de la solution pauvre 110 du deuxième dispositif d'échange thermique 1300. De préférence, la sortie 411 de la solution pauvre 110 de la première valve d'expansion 410 est fluidiquement connectée, de préférence directement, à l'entrée 1210 de la solution pauvre 110 du premier dispositif d'échange thermique 1200. De manière avantageuse, la première valve d'expansion 410 est configurée pour modifier la température de la solution pauvre 110, de préférence pour modifier la température de la solution pauvre 110 par une détente isenthalpique. Cela permet que la solution pauvre 110 soit à basse pression lorsqu'elle arrive au premier dispositif d'échange thermique 1200 et de préférence à l'absorbeur 1100.

Selon un mode de réalisation, la deuxième valve d'expansion 420 est fluidiquement disposée entre le condenseur 1700 et l'évaporateur 1900 relativement à la circulation de la solution pauvre 110. De préférence, la deuxième valve d'expansion 420 est fluidiquement disposée entre le quatrième dispositif d'échange thermique 1800 et l'évaporateur 1900 relativement à la circulation de la solution pauvre 110. Avantageusement, l'entrée 421 de la solution pauvre 110 de la deuxième valve d'expansion 420 est fluidiquement connectée, de préférence directement, à la sortie 1820 de la solution pauvre 110 du quatrième dispositif d'échange thermique 1800. De préférence, la sortie 422 de la solution pauvre 110 de la deuxième valve d'expansion 420 est fluidiquement connectée, de préférence directement, à l'entrée 1910 de la solution pauvre 110 de l'évaporateur 1900. De manière avantageuse, la deuxième valve d'expansion 420 est configurée pour permettre de modifier la température de la solution pauvre 110, de préférence pour permettre à la solution pauvre 110 d'atteindre une température d'évaporation prédéterminée avant que la solution pauvre 110 ne pénètre dans l'évaporateur 1900. Avantageusement, la deuxième valve d'expansion 420 fait subir à la solution pauvre 110 une détente isenthalpique.

Selon un mode de réalisation, la première valve d'expansion 410 est configurée pour produire une détente isenthalpique.

Selon un autre mode de réalisation, la première valve d'expansion 410 est configurée pour générer une détente isotherme. Cela permet d'améliorer l'effet ou les effets thermodynamiques du premier dispositif d'échange thermique 1200 sur le mélange 100 en circulation.

Selon un mode de réalisation, la pompe à solution 300 est disposée fluidiquement entre l'absorbeur 1100 et le premier dispositif d'échange de chaleur 1200 relativement à la circulation de la solution riche 130. De préférence, l'entrée 310 de la solution riche 130 de la pompe à solution 300 est fluidiquement connectée, de préférence directement, à la sortie 1120 de la solution riche 130 de l'absorbeur 1100. Avantageusement, la sortie 320 de la solution riche 130 de la pompe à solution 300 est fluidiquement connectée, de préférence directement, à l'entrée 1230 de la solution riche 130 du premier dispositif d'échange thermique 1200. De manière astucieuse, la pompe à solution 300 est configurée pour modifier la pression de la solution riche 130, de préférence pour augmenter la pression de la solution riche 130. En particulier, et de manière avantageuse, la pompe à solution 300 assure la mise en circulation du mélange dans la machine 1000. La pompe à solution 300 amène la solution riche 130 de préférence à la haute pression.

Au travers des figures 1 et 2, on peut définir au moins quatre parcours différents selon la solution considérée.

Selon un mode de réalisation, la machine 1000 comprend un parcours de circulation de la solution riche 130 :
- A la sortie de l'absorbeur 1100, la solution riche 130 est à l'état liquide, de préférence la solution riche 130 est dans un état de saturation relativement au deuxième fluide ;
- La solution riche 130 est ensuite pompée par la pompe à solution 300 ;
- La solution riche 130 pénètre alors dans le première dispositif d'échange thermique 1200 pour y être chauffée ;
- En sortie du premier dispositif d'échange thermique 1200, la solution riche 130 poursuit sa circulation dans le troisième dispositif d'échange thermique 1500, de préférence au niveau de sa première partie ; Dans le troisième dispositif d'échange thermique 1500, la solution riche 130 subit une désorption au moins partielle la rendant diphasique, cela est rendue possible via son interaction thermique avec la solution pauvre 110, de préférence circulant en contre-courant dans le troisième dispositif d'échange thermique 1500 ; la solution riche 130 est alors diphasique en sortant du troisième dispositif d'échange thermique 1500 ;
- Ensuite, la solution riche 130 rendue diphasique pénètre dans le deuxième dispositif d'échange thermique 1300 pour interagir thermiquement avec la solution pauvre 110 ;
- Enfin, la solution riche 130, qui est alors diphasique, pénètre dans la première bouteille de séparation 1410 ; la première bouteille de séparation 1410 effectue alors une récupération de la chaleur depuis la solution réfrigérante 140 ; La première bouteille de séparation 1410 sépare alors la partie liquide et la partie gazeuse de la solution riche 130 ; la partie gazeuse vient alimenter la solution réfrigérante 140 ; la partie liquide forme en partie au moins la solution pauvre 110.

Selon un mode de réalisation, la machine 1000 comprend un parcours de circulation de la solution pauvre 110 :
- La solution pauvre 110 sort de la première bouteille de séparation 1410 et se trouve alors mélangée avec la solution réfrigérante 140 ;
- Puis, la solution pauvre 110 pénètre dans le générateur de chaleur 1900 ; le générateur de chaleur 1900 chauffe alors la solution pauvre 110 jusqu'à ladite haute température ;
- La solution pauvre 110 sort alors dans un état diphasique du générateur de chaleur 1900 et pénètre dans la troisième bouteille de séparation 1430 ; La troisième bouteille de séparation 1430 sépare alors la partie liquide de la solution pauvre 110 et la partie gazeuse de la solution pauvre 110 ; La partie liquide de la solution pauvre 110 sort alors de la troisième bouteille de séparation 1430 en direction du deuxième dispositif d'échange thermique 1300 ; la partie gazeuse de la solution pauvre 110 forme alors en partie au moins la solution réfrigérante 140 ;
- En traversant le deuxième dispositif d'échange thermique 1300, la solution pauvre 110 dont la température est encore très élevée transfert une partie de cette chaleur à la solution riche 130 ; La température de la solution pauvre 110 en sortie du deuxième dispositif d'échange thermique 1300 est donc inférieure à la température de la solution pauvre 110 en entrée du deuxième dispositif d'échange thermique 1300 ;
- Ensuite la solution pauvre 110 voit sa pression réduite par la première valve d'expansion 410 ;
- Puis, afin de débuter la phase d'absorption, la solution pauvre 110 travers le première dispositif d'échange thermique 1200 et voit sa température réduire avant de pénétrer dans l'absorbeur 1100 ; Avantageusement, avant de pénétrer dans le premier dispositif d'échange thermique 1200, la solution pauvre 110 est mélangée avec la solution réfrigérante 140 en provenance de l'évaporateur 1900, de préférence du quatrième dispositif d'échange thermique 1800 ; La solution pauvre 110 en sortie du premier dispositif d'échange thermique 1200 présente donc une concentration massique en deuxième fluide plus importante que la solution pauvre 110 en entrée du premier dispositif d'échange thermique 1200 ;
- Enfin, la solution pauvre 110 pénètre dans l'absorbeur 1100 de sorte à atteindre un point de saturation formant ainsi la solution riche 130.

Selon un mode de réalisation, la machine 1000 comprend un parcours de circulation de la solution réfrigérante 140 :
- La solution réfrigérante 140 est générée au niveau de la troisième bouteille de séparation 1430 où elle se trouve alors à haute température et à haute pression ;
- La solution réfrigérante 140 pénètre alors dans la première bouteille de séparation 1410 où une partie de sa chaleur est récupérée par la solution riche 130 où se produit alors la génération d'une portion gazeuse additionnelle rejoignant alors la solution réfrigérante 140 ;
- Ensuite, la solution réfrigérante 140, dans un état gazeux, pénètre dans le troisième dispositif d'échange thermique 1500 où sa température est alors réduite, on parle ici de rectification ; de préférence, la rectification de la vapeur de la solution réfrigérante 140 est un procédé qui permet d'augmenter sa teneur en deuxième fluide, en séparant les autres composants indésirables ;
- La solution réfrigérante 140 présente une température inférieure en sortie du troisième dispositif d'échange thermique 1500 qu'en entrée de celui-ci ;
- Puis, la solution réfrigérante 140 pénètre dans la deuxième bouteille de séparation 1420 ; là, elle est alors séparée de manière à augmenter sa concentration massique en deuxième fluide ; Ainsi, en sortie de la deuxième bouteille de séparation 1420, la concentration massique en deuxième fluide de la solution réfrigérante 140 est plus élevée qu'en entrée de la deuxième bouteille de séparation 1420 ; Dans la deuxième bouteille de séparation 1420, une portion liquide de la solution réfrigérante 140 est séparée et forme alors la solution condensée 120 ;
- Ensuite la solution réfrigérante 140 pénètre dans le condenseur 1700 pour y être refroidie et de préférence condensée ;
- Ensuite, la solution réfrigérante 140 pénètre dans le quatrième dispositif d'échange thermique 1800 pour y être refroidie encore ;
- Une fois sortie du quatrième dispositif d'échange thermique 1800, la solution réfrigérante 140 subit une détente isenthalpique par la deuxième valve d'expansion 420 ; Cela permet alors de faire atteindre à la solution réfrigérante 140 une pression d'évaporation, de préférence cette pression d'évaporation est comprise entre 10bar et 0.1bar, et avantageusement entre 5bar et 1bar ;
- Ensuite, la solution réfrigérante 140 pénètre dans l'évaporateur 1900 et refroidi le troisième fluide caloporteur extérieur 230 en s'évaporant ; Cela augmente alors la température de la solution réfrigérante 140 ;
- Enfin, la solution réfrigérante 140 pénètre de nouveau dans le quatrième dispositif d'échange thermique 1800 pour interagir thermiquement avec la solution réfrigérante 140 avant que celle-ci ne pénètre dans l'évaporateur 1900, cela permet de réchauffer la solution réfrigérante 140 sortant de l'évaporateur 1900 et se dirigeant vers le premier dispositif d'échange thermique 1200.

Selon un mode de réalisation, la machine 1000 comprend un parcours de circulation de la solution condensée 120 :
- La solution condensée 120 générée dans la deuxième bouteille de séparation 1420 en sort afin d'être mélangée avec la solution pauvre 110 avant que celle-ci ne pénètre dans le générateur de chaleur 1600.

Ainsi, la présente invention permet de réaliser un cycle thermodynamique de type GAX avec de préférence uniquement des échangeurs à plaques, en gardant, voire en améliorant les performances de ce type de machines mais au même temps en réduisant les coûts, l'encombrement et les difficultés de maintenance.

De plus, la présente invention permet de générer du froid ou de la chaleur en fonction de sa configuration opérationnelle. Cela permet alors d'augmenter les applications possibles et par conséquence son intérêt économique.

Ainsi, la déstructuration des anciennes et encombrantes colonnes de l'absorbeur et du générateur de chaleur permet l'utilisation astucieuse de nouveaux dispositifs thermodynamiques disposés et configurés de manière ingénieuses. Cela permet de réduire le développement vertical des composants et cela permet une meilleure répartition des composants dans l'espace.

La présente invention permet une meilleure compacité de la machine, par exemple via l'utilisation des bouteilles de séparation et/ou via l'utilisation d'un ou de plusieurs échangeurs thermiques à plaques.

La présente invention rend l'assemblage et la maintenance de la machine plus simple.

Selon un mode de réalisation et à titre d'exemple non limitatif, la présente invention permet d'obtenir les résultats suivants :
- Production de froid positif (0-18°C) à haute performance (COP thermique >0,8) ;
- Production de froid négatif (-40°C -> 0°C) à haute performance (COP thermique >supérieur à 25 à -40°C) ;
- Production de chaleur jusqu'à 85°C à haute performance (COP thermique >1,5) ;
- Gamme de fonctionnement de température du générateur de chaleur entre 90 et 180 degrés Celsius.

L'invention n'est pas limitée aux modes de réalisations précédemment décrits et s'étend à tous les modes de réalisation couverts par les revendications.

### LISTE DES REFERENCES

- 100: Mélange en circulation
- 110: Solution pauvre
- 111: Sens de circulation de la solution pauvre dans l'échangeur à plaques
- 112: Solution réfrigérante en phase gazeuse
- 113: Solution pauvre en phase liquide
- 120: Solution condensée
- 130: Solution riche
- 131: Sens de circulation de la solution riche dans l'échangeur à plaques
- 132: Solution riche en phase gazeuse
- 140: Solution réfrigérante
- 150: Transfert thermique
- 160: Plaques de l'échangeur à plaques
- 210: Premier fluide caloporteur extérieur
- 220: Deuxième fluide caloporteur extérieur
- 230: Troisième fluide caloporteur extérieur
- 240: Quatrième fluide caloporteur extérieur
- 250: Cinquième fluide caloporteur extérieur
- 300: Pompe à solution
- 410: Première valve d'expansion
- 420: Deuxième valve d'expansion
- 1000: Machine à absorption
- 1100: Absorbeur
- 1110: Entrée de la solution pauvre de l'absorbeur
- 1120: Sortie de la solution riche de l'absorbeur
- 1130: Entrée du premier fluide caloporteur extérieur de l'absorbeur
- 1140: Sortie du premier fluide caloporteur extérieur de l'absorbeur
- 1200: Premier dispositif d'échange thermique
- 1210: Entrée de la solution pauvre du premier dispositif d'échange thermique
- 1220: Sortie de la solution pauvre du premier dispositif d'échange thermique
- 1230: Entrée de la solution riche du premier dispositif d'échange thermique
- 1240: Sortie de la solution riche du premier dispositif d'échange thermique
- 1300: Deuxième dispositif d'échange thermique
- 1310: Entrée de la solution pauvre du deuxième dispositif d'échange thermique
- 1320: Sortie de la solution pauvre du deuxième dispositif d'échange thermique
- 1330: Entrée de la solution riche du deuxième dispositif d'échange thermique
- 1340: Sortie de la solution riche du deuxième dispositif d'échange thermique
- 1410: Première bouteille de séparation
- 1411: Entrée de la solution riche de la première bouteille de séparation
- 1412: Sortie de la solution pauvre de la première bouteille de séparation
- 1413: Entrée de la solution concentrée de la première bouteille de séparation
- 1414: Sortie de la solution concentrée de la première bouteille de séparation
- 1420: Deuxième bouteille de séparation
- 1421: Entrée de la solution riche de la deuxième bouteille de séparation
- 1422: Sortie de la solution pauvre de la deuxième bouteille de séparation
- 1423: Entrée de la solution concentrée de la deuxième bouteille de séparation
- 1430: Troisième bouteille de séparation
- 1431: Entrée de la solution riche de la troisième bouteille de séparation
- 1432: Sortie de la solution pauvre de la troisième bouteille de séparation
- 1433: Entrée de la solution concentrée de la troisième bouteille de séparation
- 1500: Troisième dispositif d'échange thermique
- 1510: Entrée de la solution concentrée du troisième dispositif d'échange thermique
- 1520: Sortie de la solution concentrée du troisième dispositif d'échange thermique
- 1530: Entrée de la solution riche du troisième dispositif d'échange thermique
- 1540: Sortie de la solution riche du troisième dispositif d'échange thermique
- 1550: Entrée du cinquième fluide caloporteur extérieur du troisième dispositif d'échange thermique
- 1560: Sortie du cinquième fluide caloporteur extérieur du troisième dispositif d'échange thermique
- 1600: Générateur de chaleur
- 1610: Entrée de la solution pauvre du troisième dispositif d'échange thermique
- 1620: Sortie de la solution pauvre du troisième dispositif d'échange thermique
- 1630: Entrée du deuxième fluide caloporteur extérieur du troisième dispositif d'échange thermique
- 1640: Sortie du deuxième fluide caloporteur extérieur du troisième dispositif d'échange thermique
- 1700: Condenseur
- 1710: Entrée de la solution concentrée du condenseur
- 1720: Sortie de la solution concentrée du condenseur
- 1730: Entrée du troisième fluide caloporteur extérieur du condenseur
- 1740: Sortie du troisième fluide caloporteur extérieur du condenseur
- 1800: Quatrième dispositif d'échange thermique
- 1810: Entrée principale de la solution concentrée du quatrième dispositif d'échange thermique
- 1820: Sortie principale de la solution concentrée du quatrième dispositif d'échange thermique
- 1830: Entrée secondaire de la solution concentrée du quatrième dispositif d'échange thermique
- 1840: Sortie secondaire de la solution concentrée du quatrième dispositif d'échange thermique
- 1900: Evaporateur
- 1910: Entrée de la solution concentrée de l'évaporateur
- 1920: Sortie de la solution concentrée de l'évaporateur
- 1930: Entrée du quatrième fluide caloporteur extérieur de l'évaporateur
- 1940: Sortie du quatrième fluide caloporteur extérieur de l'évaporateur

## Revendications

1. Machine (1000) à absorption comprenant un mélange en circulation (100) dans un circuit, la machine comprenant principalement un premier et un deuxième fluides, la machine (1000) présentant une première configuration dans laquelle la machine (1000) produit du froid et une deuxième configuration dans laquelle la machine (1000) produit de la chaleur, ledit mélange en circulation (100) présentant une concentration massique en deuxième fluide variant en fonction de sa position dans le circuit de sorte à définir pour le mélange en circulation, en fonction de la position, une solution dite pauvre (110), une solution dite condensée (120), une solution dite riche (130), et une solution dite réfrigérante (140), ladite machine (1000) comprenant au moins :
• Un absorbeur (1100) configuré pour augmenter le taux de concentration massique du deuxième fluide de la solution pauvre (110) de sorte à transformer la solution pauvre (110) en solution riche (130);
• Un premier dispositif d'échange thermique (1200) configuré pour augmenter la température de la solution riche (130) à partir de la solution pauvre (110),
• Un générateur de chaleur (1600) configuré pour augmenter la température de la solution pauvre (110),
• Un condenseur (1700) configuré pour condenser la solution réfrigérante (140),
• Un évaporateur (1900) configuré pour évaporer une partie au moins de la solution réfrigérante (140),
et dans laquelle :
• Dans la première configuration, la machine (1000) est configurée pour refroidir un fluide caloporteur extérieur circulant dans l'évaporateur (1700) ;
• Dans la deuxième configuration, un fluide caloporteur extérieur (210) circulant dans l'absorbeur (1100) et un fluide caloporteur extérieur (230) circulant dans le condenseur forment un seul et même fluide caloporteur extérieur, désigné fluide caloporteur extérieur commun, la machine (1000) étant alors configurée pour augmenter la température dudit fluide caloporteur extérieur commun,
**caractérisée en ce que** la machine comprend :
• Une première bouteille de séparation (1410) configurée pour séparer la solution riche (130) en une partie liquide et en une partie gazeuse, la partie gazeuse étant destinée à alimenter la solution réfrigérante (140) et la partie liquide formant la solution pauvre (110), la première bouteille de séparation (1410) étant fluidiquement connectée à une sortie (1240) de la solution riche (130) du premier dispositif d'échange thermique (1200) et à une entrée (1910) de la solution pauvre (110) du générateur de chaleur (1600),
• Une deuxième bouteille de séparation (1420) configurée pour extraire en partie au moins la solution condensée (120) depuis la solution réfrigérante (140), la deuxième bouteille de séparation (1420) étant fluidiquement connectée à une sortie (1414) de la solution réfrigérante (140) de la première bouteille de séparation (1410) et à une entrée (1710) de la solution réfrigérante (140) du condenseur (1700),
• Une troisième bouteille de séparation (1430) configurée pour séparer la solution pauvre (110) en une partie liquide et en une partie gazeuse, la partie gazeuse formant la solution réfrigérante (140) et la partie liquide formant la solution pauvre (110), la troisième bouteille de séparation (1430) étant fluidiquement connectée à une sortie (1620) de la solution pauvre (110) du générateur de chaleur (1600), à une entrée (1210) de la solution pauvre (110) du premier dispositif d'échange thermique (1200) et à une entrée (1413) de la solution réfrigérante (140) de la première bouteille de séparation (1410).

2. Machine (100) selon la revendication précédente dans laquelle le premier fluide comprend de l'eau et/ou un solvant comme le nitrate de lithium ou le thio-cyanate de sodium, et dans laquelle le deuxième fluide comprend de l'ammoniac ou de l'alcool.

3. Machine (1000) selon l'une quelconque des revendications précédentes dans laquelle la solution pauvre présente un premier taux de concentration massique du deuxième fluide, et dans laquelle la solution condensée présente un deuxième taux de concentration massique du deuxième fluide, et dans laquelle la solution riche présente un troisième taux de concentration massique du deuxième fluide, et dans laquelle la solution réfrigérante présente un quatrième taux de concentration massique du deuxième fluide, le premier taux de concentration, le deuxième taux de concentration, le troisième taux de concentration et le quatrième taux de concentration étant chacun différent les uns des autres, de préférence le premier taux de concentration massique du deuxième fluide est inférieur au deuxième taux de concentration massique du deuxième fluide, et dans laquelle le premier taux de concentration massique du deuxième fluide et le troisième taux de concentration massique du deuxième fluide sont inférieurs au quatrième taux de concentration massique du deuxième fluide.

4. Machine (1000) selon l'une quelconque des revendications précédentes dans laquelle:
• L'absorbeur (1100) comprend :
- une entrée (1110) de la solution pauvre (110), la solution pauvre (110) présentant une première température,
- une sortie (1120) de la solution riche (130), la solution riche (130) présentant une deuxième température inférieure à la première température,
- une entrée (1130) d'un premier fluide caloporteur extérieur (210), et
- une sortie (1140) du premier fluide caloporteur extérieur (210), l'absorbeur (1100) étant configuré pour faire interagir thermiquement la solution pauvre (110) et le premier fluide caloporteur extérieur (210) de sorte à transformer la solution pauvre (110) en solution riche (130), de préférence de sorte à diminuer la température de la solution pauvre (110), avantageusement de manière à augmenter le taux de concentration massique du deuxième fluide la transformant ainsi en solution riche (130) ;
• Le premier dispositif d'échange thermique (1200) comprend :
- une entrée (1230) de la solution riche (130),
- une entrée (1210) de la solution pauvre (110),
- une sortie (1240) de la solution riche (130) et
- une sortie (1220) de la solution pauvre (110),
le premier dispositif d'échange thermique (1200) étant configuré pour faire interagir thermiquement la solution riche (130) avec la solution pauvre (110) de sorte à modifier, de préférence à augmenter, la température de la solution riche (130),
l'entrée (1230) de la solution riche (130) du premier dispositif d'échange thermique (1200) étant fluidiquement connectée à la sortie (1120) de la solution riche (130) de l'absorbeur (1100), et
la sortie (1220) de la solution pauvre (110) du premier dispositif d'échange thermique (1200) étant fluidiquement connectée à l'entrée (1110) de la solution pauvre (110) de l'absorbeur (1100) ;
• La première bouteille de séparation (1410) comprend :
- une entrée (1411) de la solution riche (130),
- une entrée (1413) de la solution réfrigérante (140),
- une sortie (1412) de la solution pauvre (110) et
- une sortie (1414) de la solution réfrigérante (140),
la première bouteille de séparation (1410) étant configurée pour séparer la solution riche (130) en une partie liquide et en une partie gazeuse, la partie gazeuse étant destinée à alimenter la solution réfrigérante (140) et la partie liquide formant la solution pauvre (110) l'entrée (1411) de la solution riche (130) de la première bouteille de séparation (1410) étant fluidiquement connectée à la sortie (1240) de la solution riche (130) du premier dispositif d'échange thermique (1200) ;
• La deuxième bouteille de séparation (1420) comprend :
- une entrée (1421) de la solution réfrigérante (140),
- une sortie (1422) de la solution réfrigérante (140) et
- une sortie (1423) de la solution réfrigérante (140),
l'entrée (1421) de la solution réfrigérante (140) de la deuxième bouteille de séparation (1410) étant fluidiquement connectée à la sortie (1414) de la solution réfrigérante (140) de la première bouteille de séparation (1410) ;
• Le générateur de chaleur (1600) comprend :
- une entrée (1610) de la solution pauvre (110),
- une sortie (1620) de la solution pauvre (110),
le générateur de chaleur (1600) étant configuré pour faire interagir thermiquement la solution pauvre (110) et un deuxième fluide caloporteur extérieur (220), de préférence de sorte à augmenter la température de la solution pauvre (110),
L'entrée (1610) de la solution pauvre (110) du générateur de chaleur (1600) étant fluidiquement connectée à la sortie (1412) de la solution pauvre (110) de la première bouteille de séparation (1410) et à la sortie (1423) de la solution condensée (120) de la deuxième bouteille de séparation (1420),
La solution pauvre (110) et la solution condensée (140) étant mélangées au niveau de l'entrée (1610) de la solution pauvre (110) du générateur de chaleur (1600) ;
• La troisième bouteille de séparation (1430) comprend :
- une entrée (1431) de la solution pauvre (110),
- une sortie (1432) de la solution pauvre (110) et
- une sortie (1433) de la solution réfrigérante (140),
l'entrée (1431) de la solution pauvre (110) de la troisième bouteille de séparation (1430) étant fluidiquement connectée à la sortie (1620) de la solution pauvre (110) du générateur de chaleur (1600),
la sortie (1432) de la solution pauvre (110) de la troisième bouteille de séparation (1430) étant fluidiquement connectée à l'entrée (1210) de la solution pauvre (110) du premier dispositif d'échange thermique (1200), la sortie (1433) de la solution réfrigérante (140) de la troisième bouteille de séparation (1430) étant fluidiquement connectée à l'entrée (1413) de la solution réfrigérante (140) de la première bouteille de séparation (1410) ;
• Le condenseur (1700) comprend :
- une entrée (1710) de la solution réfrigérante (140),
- une entrée (1730) d'un troisième fluide caloporteur extérieur (230),
- une sortie (1720) de la solution réfrigérante (140) et
- une sortie (1740) du troisième fluide caloporteur extérieur (230), le condenseur (1700) étant configuré pour faire interagir thermiquement la solution réfrigérante (140) et le troisième fluide caloporteur extérieur (230) de sorte à condenser la solution réfrigérante (140),
L'entrée (1710) de la solution réfrigérante (140) du condenseur (1700) étant fluidiquement connectée à la sortie (1422) de la solution réfrigérante (140) de la deuxième bouteille de séparation (1420) ;
• L'évaporateur (1900) comprend :
- une entrée (1910) de la solution réfrigérante (140),
- une sortie (1920) de la solution réfrigérante (140),
l'évaporateur (1900) étant configuré pour faire interagir thermiquement la solution réfrigérante (140) et un quatrième fluide caloporteur extérieur (240) de sorte à modifier la température du quatrième fluide caloporteur extérieur (240) via l'évaporation d'une partie au moins de la solution réfrigérante (140), de préférence à diminuer la température du quatrième fluide caloporteur extérieur (240) via l'évaporation d'une partie au moins de la solution réfrigérante (140),
l'entrée (1910) de la solution réfrigérante (140) de l'évaporateur (1900) étant fluidiquement connectée à la sortie de la solution réfrigérante (1720) du condenseur (1700),
la sortie (1920) de la solution réfrigérante (140) de l'évaporateur (1900) étant fluidiquement connectée à l'entrée (1210) de la solution pauvre (110) du premier dispositif d'échange thermique (1200),
La solution pauvre (110) et la solution réfrigérante (140) étant mélangées au niveau de l'entrée (1210) de la solution pauvre (110) du premier dispositif d'échange thermique (1210) ;
Et dans laquelle :
• Dans la première configuration, la machine (1000) est configurée pour refroidir le quatrième fluide caloporteur extérieur (240) ;
• Dans la deuxième configuration, le premier fluide caloporteur extérieur (210) et le troisième fluide caloporteur extérieur (230) forment un seul et même fluide caloporteur extérieur commun de sorte à ce que respectivement la sortie (1140) du premier fluide caloporteur extérieur (210) de l'absorbeur (1100) ou l'entrée (1130) du premier fluide caloporteur extérieur (210) de l'absorbeur (1100) soit fluidiquement connectée respectivement à l'entrée (1730) du troisième fluide caloporteur extérieur (230) du condenseur (1700) ou la sortie (1740) du troisième fluide caloporteur extérieur (230) du condenseur (1700), la machine (1000) étant alors configurée pour augmenter la température dudit fluide caloporteur extérieur commun.

5. Machine (1000) selon la revendication précédente dans laquelle au moins l'un parmi l'absorbeur (1100), le premier dispositif d'échange thermique (1200), le générateur de chaleur (1600), le condenseur (1700), l'évaporateur (1900) comprend au moins un échangeur thermique à plaques, de préférence l'échangeur thermique à plaques est configuré pour que les fluides le traversant circulent en contre-courant les uns relativement aux autres.

6. Machine (1000) selon l'une quelconque des revendications 4 et 5 comprenant un deuxième dispositif d'échange thermique (1300) comprenant :
• une entrée (1330) de la solution riche (130),
• une entrée (1310) de la solution pauvre (110),
• une sortie (1340) de la solution riche (130),
• une sortie (1320) de la solution pauvre (110),
le deuxième dispositif d'échange thermique (1300) configuré pour faire interagir thermiquement la solution riche (130) avec la solution pauvre (110), de préférence pour faire augmenter la température de la solution riche (130) et pour faire diminuer la température de la solution pauvre (110),
l'entrée (1330) de la solution riche (130) du deuxième dispositif d'échange thermique (1300) étant fluidiquement connectée avec la sortie (1240) de la solution riche (130) du première dispositif d'échange thermique (1200),
la sortie (1340) de la solution riche 130 du deuxième dispositif d'échange thermique (1300) étant fluidiquement connectée à l'entrée (1411) de la solution riche (130) de la première bouteille de séparation (1410),
l'entrée (1310) de la solution pauvre (110) du deuxième dispositif d'échange thermique (1300) étant fluidiquement connectée avec la sortie (1432) de la solution pauvre (110) de la troisième bouteille de séparation (1430),
la sortie (1320) de la solution pauvre (110) du deuxième dispositif d'échange thermique (1300) étant fluidiquement connectée avec l'entrée (1210) de la solution pauvre (110) du premier dispositif d'échange thermique (1200), de préférence le deuxième dispositif d'échange thermique (1300) comprend au moins un échangeur thermique à plaques, de préférence la solution pauvre (110) et la solution riche (130) circulent à contre-courant dans l'échangeur thermique à plaques du deuxième dispositif d'échange thermique (1300).

7. Machine (1000) selon l'une quelconque des revendications 4 à 6 comprenant un troisième dispositif d'échange thermique (1500) comprenant :
• une entrée principale (1510) de la solution réfrigérante (140),
• une sortie principale (1520) de la solution réfrigérante (140),
• une entrée secondaire (1530) de la solution riche (130),
• une sortie secondaire (1540) de la solution riche (130),
• une entrée additionnelle (1550) d'un cinquième fluide caloporteur extérieur (250),
• une sortie additionnelle (1560) du cinquième fluide caloporteur extérieur (250),
le troisième dispositif d'échange thermique (1500) étant configuré pour faire interagir thermiquement la solution réfrigérante (140) avec la solution riche (130) de manière à augmenter la température de la solution riche (130), et la solution réfrigérante (140) avec un cinquième fluide caloporteur extérieur (250) de manière à diminuer la température de la solution réfrigérante (140),
l'entrée principale (1510) de la solution réfrigérante (140) du troisième dispositif d'échange thermique (1500) étant fluidiquement connectée à la sortie (1414) de la solution réfrigérante (140) de la première bouteille de séparation (1410),
la sortie principale (1520) de la solution réfrigérante (140) du troisième dispositif d'échange thermique (1500) étant fluidiquement connectée à l'entrée (1421) de la solution réfrigérante (140) de la deuxième bouteille de séparation (1420),
l'entrée secondaire (1530) de la solution riche (130) du troisième dispositif d'échange thermique (1500) étant fluidiquement connectée à la sortie (1240) de la solution riche (130) du premier dispositif d'échange thermique (1200),
la sortie secondaire (1540) de la solution riche (130) du troisième dispositif d'échange thermique (1500) étant fluidiquement connectée à l'entrée (1411) de la solution riche (130) de la première bouteille de séparation (1410), de préférence le troisième dispositif d'échange thermique (1500) comprend au moins un échangeur thermique à plaques, de préférence la revendication précédente dans laquelle la solution réfrigérante (140) et la solution riche (130) circulent à contre-courant dans l'échangeur thermique à plaques du troisième dispositif d'échange thermique (1500).

8. Machine (1000) selon l'une quelconque la revendication précédente en combinaison avec la revendication 6 dans laquelle la sortie secondaire (1540) de la solution riche (130) du troisième dispositif d'échange thermique (1500) est fluidiquement connectée à l'entrée (1330) de la solution riche (130) du deuxième dispositif d'échange thermique (1300)

9. Machine (1000) selon l'une quelconque des revendications 4 à 8 comprenant un quatrième dispositif d'échange thermique (1800) comprenant ;
• une entrée principale (1810) de la solution réfrigérante (140),
• une sortie principale (1820) de la solution réfrigérante (140),
• une entrée secondaire (1830) de la solution réfrigérante (140), et
• une sortie secondaire (1840) de la solution réfrigérante (140),
le quatrième dispositif d'échange thermique (1800) étant configuré pour faire interagir thermiquement la solution réfrigérante (140) avec elle-même avant son entrée dans l'évaporateur (1900) et après sa sortie de l'évaporateur (1900),
l'entrée principale (1810) de la solution réfrigérante (140) du quatrième dispositif d'échange thermique (1800) étant fluidiquement connectée à la sortie (1720) de la solution réfrigérante (140) du condenseur (1700),
la sortie principale (1820) de la solution réfrigérante (140) du quatrième dispositif d'échange thermique (1800) étant fluidiquement connectée à l'entrée principale (1910) de la solution réfrigérante (140) de l'évaporateur (1900),
l'entrée secondaire (1830) de la solution réfrigérante (140) du quatrième dispositif d'échange thermique (1800) étant fluidiquement connectée à la sortie principale (1920) de la solution réfrigérante (140) de l'évaporateur (1900),
la sortie secondaire (1840) de la solution réfrigérante (140) du quatrième dispositif d'échange thermique (1800) étant fluidiquement connectée à l'entrée (1210) de la solution pauvre (110) du premier dispositif d'échange thermique (1200), de préférence le quatrième dispositif d'échange thermique (1800) comprend au moins un échangeur thermique à plaques, de préférence la solution pauvre (110) sortant du condenseur (1700) et la solution pauvre (110) sortant de l'évaporateur (1900) circulent à contre-courant dans l'échangeur thermique à plaques du quatrième dispositif d'échange thermique (1800).

10. Machine (1000) selon l'une quelconque des revendications 4 à 9, comprenant au moins un dispositif d'augmentation de pression de la solution réfrigérante fluidiquement connecté entre la sortie (1920) de la solution réfrigérante (140) de l'évaporateur (1900) et l'entrée (1210) de la solution pauvre (110) du premier dispositif d'échange thermique (1200), de sorte à augmenter la pression du mélange de la solution pauvre (110) avec la solution réfrigérante (140) dans le premier dispositif d'échange thermique (1200), de préférence dans l'absorbeur (1100).

11. Machine (1000) selon l'une quelconque des revendications 4 à 10, comprenant au moins une première valve d'expansion (410) comprenant :
• une entrée (411) de la solution pauvre (110) et
• une sortie (412) de la solution pauvre (110),
la première valve d'expansion (410) étant configurée pour modifier la température de la solution pauvre (110), de préférence pour modifier la température de la solution pauvre (110) par une détente isenthalpique,
l'entrée (411) de la solution pauvre (110) de la valve d'expansion (410) étant fluidiquement connectée à la sortie (1432) de la solution pauvre (110) de la troisième bouteille de séparation (1430).

12. Machine (1000) selon la revendication précédente en combinaison avec la revendication 6 dans laquelle l'entrée (411) de la solution pauvre (110) de la première valve d'expansion (410) est fluidiquement connectée la sortie (1320) de la solution pauvre (110) du deuxième dispositif d'échange thermique (1300).

13. Machine (1000) selon l'une quelconque des revendications 4 à 12 comprenant au moins une deuxième valve d'expansion (420) comprenant :
• une entrée (421) de la solution réfrigérante (140) et
• une sortie (422) de la solution réfrigérante (140),
la deuxième valve d'expansion (420) étant configurée pour modifier la température de la solution réfrigérante (140), de préférence pour modifier la température de la solution réfrigérante (140) par une détente isenthalpique,
l'entrée (421) de la solution réfrigérante (140) de la deuxième valve d'expansion (420) étant fluidiquement connectée à la sortie (1720) de la solution réfrigérante (140) du condenseur (1700), de préférence à la sortie de la Solution réfrigérante 140 du quatrième dispositif d'échange thermique,
la sortie de la solution réfrigérante (140) étant fluidiquement connectée à l'entrée principale de la solution réfrigérante (140) de l'évaporateur (1900).

14. Machine (1000) selon la revendication précédente en combinaison avec la revendication 9, dans laquelle l'entrée (421) de la solution réfrigérante (140) de la deuxième valve d'expansion (420) est fluidiquement connectée la sortie principale (1820) de la solution réfrigérante (140) du quatrième dispositif d'échange thermique (1800).

15. Machine (1000) selon l'une quelconque des revendications 4 à 14 comprenant au moins une pompe à solution (300) comprenant :
• une entrée (310) de la solution riche (130), et
• une sortie (320) de la solution riche (130),
la pompe à solution (300) étant configurée pour modifier la pression de la solution riche (130), de préférence pour augmenter la pression de la solution riche (130),
l'entrée (310) de la solution riche (130) de la pompe à solution (300) étant fluidiquement connectée à la sortie (1120) de la solution riche (130) de l'absorbeur (1100), et
la sortie (320) de la solution riche (130) de la pompe à solution (300) étant fluidiquement connectée à l'entrée (1230) de la solution riche (130) du premier dispositif d'échange thermique (1200).

## Patentansprüche

1. Absorptionsmaschine (1000), die eine zirkulierende Mischung (100) in einem Kreislauf umfasst, wobei die Maschine hauptsächlich ein erstes und ein zweites Fluid umfasst, wobei die Maschine (1000) dabei eine erste Konfiguration aufweist, in der die Maschine (1000) Kälte erzeugt, und eine zweite Konfiguration, in der die Maschine (1000) Wärme erzeugt, wobei die zirkulierende Mischung (100) eine Massenkonzentration an zweitem Fluid aufweist, die in Abhängigkeit von ihrer Position in dem Kreislauf derart variiert, dass für die zirkulierenden Mischung in Abhängigkeit von der Position eine sogenannte magere Lösung (110), eine sogenannte kondensierte Lösung (120), eine sogenannte reichhaltige Lösung (130) und eine sogenannte Kältelösung (140) definiert sind, wobei die Maschine (1000) mindestens Folgendes umfasst:
• einen Absorber (1100), der dazu konfiguriert ist, eine Massenkonzentrationsrate des zweitens Fluids der mageren Lösung (110) derart zu erhöhen, dass die magere Lösung (110) in eine reichhaltige Lösung (130) umgewandelt wird;
• eine erste Wärmeaustauschvorrichtung (1200), die dazu konfiguriert ist, die Temperatur der reichhaltigen Lösung (130) ausgehend von der mageren Lösung (110) zu erhöhen,
• einen Wärmegenerator (1600), der dazu konfiguriert ist, die Temperatur der mageren Lösung (110) zu erhöhen,
• einen Kondensator (1700), der dazu konfiguriert ist, die Kältelösung (140) zu kondensieren,
• einen Verdampfer (1900), der dazu konfiguriert ist, mindestens einen Teil der Kältelösung (140) zu verdampfen,
und wobei:
• die Maschine 1000) in der ersten Konfiguration dazu konfiguriert ist, einen externen Wärmeträger, der in dem Verdampfer (1700) zirkuliert, zu kühlen;
• in der zweiten Konfiguration ein externer Wärmeträger (210), der in dem Absorber (1100) zirkuliert, und ein externer Wärmeträger (230), der in dem Kondensator zirkuliert, den einzigen und selben externen Wärmeträger bilden, der gemeinsamer externer Wärmeträger genannt wird, wobei die Maschine (1000) dazu konfiguriert ist, die Temperatur des gemeinsamen externen Wärmeträgers zu erhöhen, **dadurch gekennzeichnet, dass** die Maschine Folgendes umfasst:
• eine erste Trennflasche (1410), die dazu konfiguriert ist, die reichhaltige Lösung (130) in einen flüssigen Teil und einen gasförmigen Teil zu trennen, wobei der gasförmige Teil dazu bestimmt ist, die Kältelösung (140) zuzubringen, und der flüssige Teil die magere Lösung (110) bildet, wobei die erste Trennflasche (1410) mit einem Ausgang (1240) der reichhaltigen Lösung (130) der erste Wärmeaustauschvorrichtung (1200) und einem Eingang (1910) der mageren Lösung (110) des Wärmegenerators (1600) fluidisch verbunden ist,
• eine zweite Trennflasche (1420), die dazu konfiguriert ist, zum Teil mindestens die kondensierte Lösung (120) aus der Kältelösung (140) zu extrahieren, wobei die zweite Trennflasche (1420) mit einem Ausgang (1414) der Kältelösung (140) der ersten Trennflasche (1410) und mit einem Eingang (1710) der Kältelösung (140) des Kondensators (1700) fluidisch verbunden ist,
• eine dritte Trennflasche (1430), die dazu konfiguriert ist, die magere Lösung (110) in einen flüssigen Teil und einen gasförmigen Teil zu trennen, wobei der gasförmige Teil die Kältelösung (140) bildet, und der flüssige Teil die magere Lösung (110) bildet, wobei die dritte Trennflasche (1430) mit einem Ausgang (1620) der mageren Lösung (110) des Wärmegenerators (1600), einem Eingang (1210) der mageren Lösung (110) der ersten Wärmeaustauschvorrichtung (1200) und einem Eingang (1413) der Kältelösung (140) der ersten Trennflasche (1410) fluidisch verbunden ist.

2. Maschine (100) nach dem vorstehenden Anspruch, wobei das erste Fluid Wasser und/oder ein Lösemittel, wie Lithiumnitrat oder Natriumthiocyanat, umfasst, und wobei das zweite Fluid Ammoniak oder Alkohol umfasst.

3. Maschine (1000) nach einem der vorstehenden Ansprüche, wobei die magere Lösung eine erste Massenkonzentrationsrate des zweiten Fluids aufweist, und wobei die kondensierte Lösung eine zweite Massenkonzentrationsrate des zweiten Fluids aufweist, und wobei die reichhaltige Lösung eine dritte Massenkonzentrationsrate des zweiten Fluids aufweist, und wobei die Kältelösung eine vierte Massenkonzentrationsrate des zweiten Fluids aufweist, wobei die erste Konzentrationsrate, die zweite Konzentrationsrate, die dritte Konzentrationsrate und die vierte Konzentrationsrate jeweils voneinander unterschiedlich sind, wobei bevorzugt die erste Massenkonzentrationsrate des zweiten Fluids kleiner ist als die zweite Massenkonzentrationsrate des zweiten Fluids, und wobei die erste Massenkonzentrationsrate des zweiten Fluids und die dritte Massenkonzentrationsrate des zweiten Fluids geringer sind als die vierte Massenkonzentrationsrate des zweiten Fluids.

4. Maschine (1000) nach einem der vorstehenden Ansprüche, wobei:
• der Absorber (1100) Folgendes umfasst:
- einen Eingang (1110) der mageren Lösung (110), wobei die magere Lösung (110) eine erste Temperatur aufweist,
- einen Ausgang (1120) der reichhaltigen Lösung (130), wobei die reichhaltige Lösung (130) eine zweite Temperatur, die niedriger ist als die erste Temperatur, aufweist,
- einen Eingang (1130) eines ersten externen Wärmeträgers (210) und
- einen Ausgang (1140) des ersten externen Wärmeträgers (210), wobei der Absorber (1100) dazu konfiguriert ist, die magere Lösung (110) und den ersten externen Wärmeträger (210) derart thermisch interagieren zu lassen, dass die magere Lösung (110) in reichhaltige Lösung (130) umgewandelt wird, bevorzugt derart, dass die Temperatur der mageren Lösung (110 verringert wird, vorteilhafterweise derart, dass die Massenkonzentrationsrate des zweiten Fluids sie daher in reichhaltige Lösung (130) umwandelt;
• die erste Wärmeaustauschvorrichtung (1200) Folgendes umfasst:
- einen Eingang (1230) der reichhaltigen Lösung (130),
- einen Eingang (1210) der mageren Lösung (110),
- einen Ausgang (1240) der reichhaltigen Lösung (130) und
- einen Ausgang (1220) der mageren Lösung (110),
wobei die erste Wärmeaustauschvorrichtung (1200) dazu konfiguriert ist, die reichhaltige Lösung (130) mit der mageren Lösung (110) derart thermisch interagieren zu lassen, dass die Temperatur der reichhaltigen Lösung (130) geändert, bevorzugt erhöht wird,
wobei der Eingang (1230) der reichhaltigen Lösung (130) der ersten Wärmeaustauschvorrichtung (1200) mit dem Ausgang (1120) der reichhaltigen Lösung (130) des Absorbers (1100) fluidisch verbunden ist, und
der Ausgang (1220) der mageren Lösung (110) der ersten Wärmeaustauschvorrichtung (1200) mit dem Eingang (1110) der mageren Lösung (110) des Absorbers (1100) fluidisch verbunden ist;
• die erste Trennflasche (1410) Folgendes umfasst:
- einen Eingang (1411) der reichhaltigen Lösung (130),
- einen Eingang (1413) der Kältelösung (140),
- einen Ausgang (1412) der mageren Lösung (110) und
- einen Ausgang (1414) der Kältelösung (140),
wobei die erste Trennflasche (1410) dazu konfiguriert ist, die reichhaltige Lösung (130) in einen flüssigen Teil und einen gasförmigen Teil zu trennen, wobei der gasförmige Teil dazu bestimmt ist, die Kältelösung (140) zuzubringen, und der flüssige Teil die magere Lösung (110) bildet,
wobei der Eingang (1411) der reichhaltigen Lösung (130) der ersten Trennflasche (1410) mit dem Ausgang (1240) der reichhaltigen Lösung (130) der ersten Wärmeaustauschvorrichtung (1200) fluidisch verbunden ist;
• die zweite Trennflasche (1420) Folgendes umfasst:
- einen Eingang (1421) der Kältelösung (140),
- einen Ausgang (1422) der Kältelösung (140) und
- einen Ausgang (1423) der Kältelösung (140),
wobei der Eingang (1421) der Kältelösung (140) der zweiten Trennflasche (1410) mit dem Ausgang (1414) der Kältelösung (140) der ersten Trennflasche (1410) fluidisch verbunden ist;
• der Wärmegenerator (1600) Folgendes umfasst:
- einen Eingang (1610) der mageren Lösung (110),
- einen Ausgang (1620) der mageren Lösung (110),
wobei der Wärmegenerator (1600) dazu konfiguriert ist, die magere Lösung (110) und einen zweiten externen Wärmeträger (220) bevorzugt derart thermisch interagieren zu lassen, dass die Temperatur der mageren Lösung (110) erhöht wird,
wobei der Eingang (1610) der mageren Lösung (110) des Wärmegenerators (1600) mit dem Ausgang (1412) der mageren Lösung (110) der ersten Trennflasche (1410) und mit dem Ausgang (1423) der kondensierten Lösung (120) der zweiten Trennflasche (1420) fluidisch verbunden ist,
die magere Lösung (110) und die kondensierte Lösung (140) im Bereich des Eingangs (1610) der mageren Lösung (110) des Wärmegenerators (1600) gemischt werden;
• die dritte Trennflasche (1430) Folgendes umfasst:
- einen Eingang (1431) der mageren Lösung (110),
- einen Ausgang (1432) der mageren Lösung (110) und
- einen Ausgang (1433) der Kältelösung (140),
wobei der Eingang (1431) der mageren Lösung (110) der dritten Trennflasche (1430) mit dem Ausgang (1620) der mageren Lösung (110) der ersten Wärmeaustauschvorrichtung (1600) fluidisch verbunden ist,
wobei der Ausgang (1432) der mageren Lösung (110) der dritten Trennflasche (1430) mit dem Eingang (1210) der mageren Lösung (110) der ersten Wärmeaustauschvorrichtung (1200) verbunden ist, der Ausgang (1433) der Kältelösung (140) der dritten Trennflasche (1430) fluidisch mit dem Eingang (1413) der Kältelösung (140) der ersten Trennflasche (1410) fluidisch verbunden ist;
• der Kondensator (1700) Folgendes umfasst:
- einen Eingang (1710) der Kältelösung (140),
- einen Eingang (1730) eines dritten externen Wärmeträgers (230),
- einen Ausgang (1720) der Kältelösung (140) und
- einen Ausgang (1740) des dritten externen Wärmeträgers (230),
wobei der Kondensator (1700) dazu konfiguriert ist, die Kältelösung (140) und den dritten externen Wärmeträger (230) derart thermisch interagieren zu lassen, dass die Kältelösung (140) kondensiert wird,
wobei der Eingang (1710) der Kältelösung (140) des Kondensators (1700) mit dem Ausgang (1422) der Kältelösung (140) der zweiten Trennflasche (1420) fluidisch verbunden ist;
• der Verdampfer (1900) Folgendes umfasst:
- einen Eingang (1910) der Kältelösung (140),
- einen Ausgang (1920) der Kältelösung (140),
wobei der Verdampfer (1900) dazu konfiguriert ist, die Kältelösung (140) und einen vierten externen Wärmeträger (240) derart thermisch interagieren zu lassen, dass die Temperatur des vierten externen Wärmeträgers (240) über die Verdampfung mindestens eines Teils der Kältelösung (140) geändert wird, bevorzugt die Temperatur des vierten externen Wärmeträgers (240) über die Verdampfung mindestens eines Teils der Kältelösung (140) verringert wird,
wobei der Eingang (1910) der Kältelösung (140) des Verdampfers (1900) mit dem Ausgang der Kältelösung (1720) des Kondensators (1700) fluidisch verbunden ist,
wobei der Ausgang (1920) der Kältelösung (140) des Verdampfers (1900) mit dem Eingang (1210) der mageren Lösung (110) der ersten Wärmeaustauschvorrichtung (1200) fluidisch verbunden ist,
die magere Lösung (110) und die Kältelösung (140) im Bereich des Eingangs (1210) der mageren Lösung (110) der ersten Wärmeaustauschvorrichtung (1210) gemischt werden;
und wobei:
• in der ersten Konfiguration die Maschine (1000) dazu konfiguriert ist, den vierten externen Wärmeträger (240) zu kühlen;
• in der zweiten Konfiguration der erste externe Wärmeträger (210) und der dritte externe Wärmeträger (230) einen einzigen und selben gemeinsamen Wärmeträger derart bilden, dass jeweils der Ausgang (1140) des ersten externen Wärmeträgers (210) des Absorbers (1100) oder der Eingang (1130) des ersten externen Wärmeträgers (210) des Absorbers (1100) jeweils mit dem Eingang (1730) des dritten externen Wärmeträgers (230) des Kondensators (1700) oder dem Ausgang (1740) des dritten externen Wärmeträgers (230) des Kondensators (1700) fluidisch verbunden sind, wobei die Maschine (1000) dabei dazu konfiguriert ist, die Temperatur des gemeinsamen externen Wärmeträgers zu erhöhen.

5. Maschine (1000) nach dem vorstehenden Anspruch, wobei mindestens einer des Absorbers (1100), der ersten Wärmeaustauschvorrichtung (1200), des Wärmegenerators (1600), des Kondensators (1700), des Verdampfers (1900) mindestens einen Plattenwärmetauscher umfasst, wobei der Plattenwärmetauscher bevorzugt konfiguriert ist, damit die Fluide, die ihn durchqueren, im Gegenstrom zueinander zirkulieren.

6. Maschine (1000) nach einem der Ansprüche 4 und 5, die eine zweite Wärmeaustauschvorrichtung (1300) umfasst, die Folgendes umfasst:
• einen Eingang (1330) der reichhaltigen Lösung (130),
• einen Eingang (1310) der mageren Lösung (110),
• einen Ausgang (1340) der reichhaltigen Lösung (130),
• einen Ausgang (1320) der mageren Lösung (110),
wobei die zweite Wärmeaustauschvorrichtung (1300) dazu konfiguriert ist, die reichhaltige Lösung (130) mit der mageren Lösung (110) thermisch interagieren zu lassen, um bevorzugt die Temperatur der reichhaltigen Lösung (130) zu erhöhen und die Temperatur der mageren Lösung (110) zu verringern,
wobei der Eingang (1330) der reichhaltigen Lösung (130) der zweiten Wärmeaustauschvorrichtung (1300) mit dem Ausgang (1240) der reichhaltigen Lösung (130) der ersten Wärmeaustauschvorrichtung (1200) fluidisch verbunden ist,
wobei der Ausgang (1340) der reichhaltigen Lösung (130) der zweiten Wärmeaustauschvorrichtung (1300) mit dem Eingang (1411) der reichhaltigen Lösung (130) der ersten Trennflasche (1410) fluidisch verbunden ist,
wobei der Eingang (1310) der mageren Lösung (110) der zweiten Wärmeaustauschvorrichtung (1300) mit dem Ausgang (1432) der mageren Lösung (110) der dritten Trennflasche (1430) fluidisch verbunden ist, und
der Ausgang (1320) der mageren Lösung (110) der zweiten Wärmeaustauschvorrichtung (1300) mit dem Eingang (1210) der mageren Lösung (110) der ersten Wärmeaustauschvorrichtung (1200) fluidisch verbunden ist, wobei die zweite Wärmeaustauschvorrichtung (1300) bevorzugt mindestens einen Plattenwärmetauscher umfasst, wobei die magere Lösung (110) und bevorzugt die reichhaltige Lösung (130) im Gegenstrom in dem Plattenwärmetauscher der zweiten Wärmeaustauschvorrichtung (1300) zirkulieren.

7. Maschine (1000) nach einem der Ansprüche 4 bis 6, die eine dritte Wärmeaustauschvorrichtung (1500) umfasst, die Folgendes umfasst:
• einen Haupteingang (1510) der Kältelösung (140),
• einen Hauptausgang (1520) der Kältelösung (140),
• einen Sekundäreingang (1530) der reichhaltigen Lösung (130),
• einen Sekundärausgang (1540) der reichhaltigen Lösung (130),
• einen zusätzlichen Eingang (1550) eines fünften externen Wärmeträgers (250),
• einen zusätzlichen Ausgang (1560) des fünften externen Wärmeträgers (250),
wobei die dritte Wärmeaustauschvorrichtung (1500) dazu konfiguriert ist, die Kältelösung (140) mit der reichhaltigen Lösung (130) derart thermisch interagieren zu lassen, dass die Temperatur der reichhaltigen Lösung (130) erhöht wird, und die Kältelösung (140) mit einem fünften externen Wärmeträger (250) derart, dass die Temperatur der Kältelösung (140) verringert wird,
wobei der Haupteingang (1510) der Kältelösung (140) der dritten Wärmeaustauschvorrichtung (1500) mit dem Ausgang (1414) der Kältelösung (140) der ersten Trennflasche (1410) fluidisch verbunden ist, der Hauptausgang (1520) der Kältelösung (140) der dritten Wärmeaustauschvorrichtung (1500) mit dem Eingang (1421) der Kältelösung (140) der zweiten Trennflasche (1420) fluidisch verbunden ist,
wobei der Sekundäreingang (1530) der reichhaltigen Lösung (130) der dritten Wärmeaustauschvorrichtung (1500) mit dem Ausgang (1240) der reichhaltigen Lösung (130) der ersten Wärmeaustauschvorrichtung (1200) fluidisch verbunden ist,
wobei der Sekundärausgang (1540) der reichhaltigen Lösung (130) der dritten Wärmeaustauschvorrichtung 1500) mit dem Eingang (1411) der reichhaltigen Lösung (130) der ersten Trennflasche (1410) fluidisch verbunden ist, wobei die dritte Wärmeaustauschvorrichtung (1500) bevorzugt mindestens einen Plattenwärmetauscher umfasst, bevorzugt dem vorstehenden Anspruch, in dem die Kältelösung (140) und die reichhaltige Lösung (130) im Gegenstrom in dem Plattenwärmetauscher der dritten Wärmeaustauscheinheit (1500) zirkulieren.

8. Maschine (1000) nach dem vorstehenden Anspruch, kombiniert mit Anspruch 6, wobei der Sekundärausgang (1540) der reichhaltigen Lösung (130) der dritten Wärmeaustauschvorrichtung (1500) mit dem Eingang (1330) der reichhaltigen Lösung (130) der zweiten Wärmeaustauschvorrichtung (1300) fluidisch verbunden ist.

9. Maschine (1000) nach einem der Ansprüche 4 bis 8, die eine vierte Wärmeaustauschvorrichtung (1800) umfasst, die Folgendes umfasst:
• einen Haupteingang (1810) der Kältelösung (140),
• einen Hauptausgang (1820) der Kältelösung (140),
• einen Sekundäreingang (1830) der Kältelösung (140), und
• einen Sekundärausgang (1840) der Kältelösung (140),
wobei die vierte Wärmeaustauschvorrichtung (1800) dazu konfiguriert ist, die Kältelösung (140) mit sich selbst vor ihrem Eintritt in den Verdampfer (1900) und nach ihrem Austritt aus dem Verdampfer (1900) thermisch interagieren zu lassen,
wobei der Haupteingang (1810) der Kältelösung (140) der vierten Wärmetauschvorrichtung (1800) mit dem Ausgang (1720) der Kältelösung (140) des Kondensators (1700) fluidisch verbunden ist,
wobei der Hauptausgang (1820) der Kältelösung (140) der vierten Wärmeaustauschvorrichtung (1800) mit dem Haupteingang (1910) der Kältelösung (140) des Verdampfers (1900) fluidisch verbunden ist,
wobei der Sekundäreingang (1830) der Kältelösung (140) der vierten Wärmeaustauschvorrichtung (1800) mit dem Hauptausgang (1920) der Kältelösung (140) des Verdampfers (1900) fluidisch verbunden ist,
wobei der Sekundärausgang (1840) der Kältelösung (140) der vierten Wärmeaustauschvorrichtung (1800) mit dem Eingang (1210) der mageren Lösung (110) der ersten Wärmeaustauschvorrichtung (1200) fluidisch verbunden ist, wobei bevorzugt Wärmeaustauschvorrichtung (1800) mindestens einen Plattenwärmetauscher umfasst, wobei die magere Lösung (110), die aus dem Kondensator (1700) austritt, und die magere Lösung (110), die aus dem Verdampfer (1900) austritt, im Gegenstrom in dem Plattenwärmetauscher der vierten Wärmeaustauschvorrichtung (1800) zirkulieren.

10. Maschine (1000) nach einem der Ansprüche 4 bis 9, die mindestens eine Druckerhöhungsvorrichtung der Kältelösung, die mit dem Ausgang (1920) der Kältelösung (140) des Verdampfers (1900) und dem Eingang (1210) der mageren Lösung (110) der ersten Wärmeaustauschvorrichtung (1200) fluidisch verbunden ist, derart umfasst, dass der Druck der Mischung der mageren Lösung (110) mit der Kältelösung (140) in der ersten Wärmeaustauschvorrichtung (1200), bevorzugt in dem Absorber (1100), erhöht wird.

11. Maschine (1000) nach einem der Ansprüche 4 bis 10, die mindestens ein erstes Expansionsventil (410) umfasst, das Folgendes umfasst:
• einen Eingang (411) der mageren Lösung (110) und
• einen Ausgang (412) der mageren Lösung (110),
wobei das erste Expansionsventil (410) dazu konfiguriert ist, die Temperatur der mageren Lösung (110) zu ändern, um bevorzugt die Temperatur der mageren Lösung (110) durch eine isenthalpische Expansion zu ändern,
wobei der Eingang (411) der mageren Lösung (110) des Expansionsventils (410) mit dem Ausgang (1432) der mageren Lösung (110) der dritten Trennflasche (1430) fluidisch verbunden ist.

12. Maschine (1000) nach dem vorstehenden Anspruch, kombiniert mit Anspruch 6,
wobei der Eingang (411) der mageren Lösung (110) des ersten Expansionsventils (410) mit dem Ausgang (1320) der mageren Lösung (110) der zweiten Wärmeaustauschvorrichtung (1300) fluidisch verbunden ist.

13. Maschine (1000) nach einem der Ansprüche 4 bis 12, die mindestens ein zweites Expansionsventil (420) umfasst, das Folgendes umfasst:
• einen Eingang (421) der Kältelösung (140) und
• einen Ausgang (422) der Kältelösung (140),
wobei das zweite Expansionsventil (420) dazu konfiguriert ist, die Temperatur der Kältelösung (140) zu ändern, um bevorzugt die Temperatur der Kältelösung (140) durch eine isenthalpische Expansion zu ändern,
wobei der Eingang (421) der Kältelösung (140) der zweiten Trennflasche (420) mit dem Ausgang (1720) der Kältelösung (140) des Kondensators (1700) fluidisch verbunden ist, bevorzugt mit dem Ausgang der Kältelösung (140) der vierten Wärmeaustauschvorrichtung,
wobei der Ausgang der Kältelösung (140) mit dem Haupteingang der Kältelösung (140) des Verdampfers (1900) fluidisch verbunden ist.

14. Maschine (1000) nach dem vorstehenden Anspruch, kombiniert mit Anspruch 9, wobei der Eingang (421) der Kältelösung (140) des zweiten Expansionsventils (420) mit dem Hauptausgang (1820) der Kältelösung (140) der vierten Wärmeaustauschvorrichtung (1800) fluidisch verbunden ist.

15. Maschine (1000) nach einem der Ansprüche 4 bis 14, die mindestens eine Lösungspumpe (300) umfasst, die Folgendes umfasst:
• einen Eingang (310) der reichhaltigen Lösung (130), und
• einen Ausgang (320) der reichhaltigen Lösung (130),
wobei die Lösungspumpe (300) dazu konfiguriert ist, den Druck der reichhaltigen Lösung (130) zu ändern, bevorzugt um den Druck der reichhaltigen Lösung (130) zu erhöhen, wobei der Eingang (310) der reichhaltigen Lösung (130) der Lösungspumpe (300) mit dem Ausgang (1120) der reichhaltigen Lösung (130) des Absorbers (1100) fluidisch verbunden ist, und
wobei der Ausgang (320) der reichhaltigen Lösung (130) der Lösungspumpe (300) mit dem Eingang (1230) der reichhaltigen Lösung (130) der ersten Wärmeaustauschvorrichtung (1200) fluidisch verbunden ist.

## Claims

1. Absorption machine (1) comprising a circulation mixture (100) in a circuit, the machine mainly comprising a first and a second fluid, the machine (1000) having a first configuration, wherein the machine (1000) produces cold and a second configuration, wherein the machine (1000) produces heat, said circulation mixture (100) having a mass concentration of second fluid varying according to its position in the circuit so as to define, for the circulation mixture, according to the position, a so-called weak solution (110), a so-called condensed solution (120), a so-called strong solution (130), and a so-called cooling solution (140), said machine (1000) comprising at least:
- An absorber (1100) configured to increase the mass concentration rate of the second fluid of the weak solution (110), so as to transform the weak solution (110) into a strong solution (130);
- A first heat exchange device (1200) configured to increase the temperature of the strong solution (130) from the weak solution (110),
- A heat generator (1600) configured to increase the temperature of the weak solution (110),
- A condenser (1700) configured to condense the cooling solution (140),
- An evaporator (1900) configured to evaporate at least some of the cooling solution (140),
and wherein:
- In the first configuration, the machine (1000) is configured to cool an external heat-transfer fluid circulating in the evaporator (1700);
- In the second configuration, an external heat-transfer fluid (210) circulating in the absorber (1100) and an external heat-transfer fluid (230) circulating in the condenser form one single and same external heat-transfer fluid, called common external heat-transfer fluid, the machine (1000) thus being configured to increase the temperature of said common external heat-transfer fluid,
**characterised in that** the machine comprises:
- A first separation bottle (1410) configured to separate the strong solution (130) into a liquid part and into a gaseous part, the gaseous part being intended to supply the cooling solution (140) and the liquid part forming the weak solution (110), the first separation bottle (1410) being fluidically connected to an outlet (1240) of the strong solution (130) of the first heat exchange device (1200) and to an inlet (1910) of the weak solution (110) of the heat generator (1600),
- A second separation bottle (1420) configured to partially extract at least the condensed solution (120) from the cooling solution (140), the second separation bottle (1420) being fluidically connected to an outlet (1414) of the cooling solution (140) of the first separation bottle (1410) and to an inlet (1710) of the cooling solution (140) of the condenser (1700),
- A third separation bottle (1430) configured to separate the weak solution (110) into a liquid part and into a gaseous part, the gaseous part forming the cooling solution (140) and the liquid part forming the weak solution (110), the third separation bottle (1430) being fluidically connected to an outlet (1620) of the weak solution (110) of the heat generator (1600), to an inlet (1210) of the weak solution (110) of the first heat exchange device (1200) and to an inlet (1413) of the cooling solution (140) of the first separation bottle (1410).

2. Machine (100) according to the preceding claim, wherein the first fluid comprises water and/or a solvent like lithium nitrate or sodium thiocyanate, and wherein the second fluid comprises ammoniac or alcohol.

3. Machine (1000) according to any one of the preceding claims, wherein the weak solution has a first mass concentration rate of the second fluid, and wherein the condensed solution has a second mass concentration rate of the second fluid, and wherein the strong solution has a third mass concentration rate of the second fluid, and wherein the cooling solution has a fourth mass concentration rate of the second fluid, the first concentration rate, the second concentration rate, the third concentration rate and the fourth concentration rate each being different from one another, preferably the first mass concentration rate of the second fluid is less than the second mass concentration rate of the second fluid, and wherein the first mass concentration rate of the second fluid and the third mass concentration rate of the second fluid are less than the fourth mass concentration rate of the second fluid.

4. Machine (1000) according to any one of the preceding claims, wherein:
- The absorber (1100) comprises:
∘ an inlet (1110) of the weak solution (110), the weak solution (110) having a first temperature,
∘ an outlet (1120) of the strong solution (130), the strong solution (130) having a second temperature less than the first temperature,
∘ an inlet (1130) of a first external heat-transfer fluid (210), and
∘ an outlet (1140) of the first external heat-transfer fluid (210),
the absorber (1100) being configured to make the weak solution (110) and the first external heat-transfer fluid (210) thermally interact, so as to transform the weak solution (110) into a strong solution (130), preferably so as to decrease the temperature of the weak solution (110), advantageously so as to increase the mass concentration rate of the second fluid, thus transforming it into a strong solution (130);
- The first heat exchange device (1200) comprises:
∘ an inlet (1230) of the strong solution (130),
∘ an inlet (1210) of the weak solution (110),
∘ an outlet (1240) of the strong solution (130), and
∘ an outlet (1220) of the weak solution (110),
the first heat exchange device (1200) being configured to make the strong solution (130) thermally interact with the weak solution (110) so as to modify, preferably, to increase the temperature of the strong solution (130),
the inlet (1230) of the strong solution (130) of the first heat exchange device (1200) being fluidically connected to the outlet (1120) of the strong solution (130) of the absorber (1100), and
the outlet (1220) of the weak solution (110) of the first heat exchange device (1200) being fluidically connected to the inlet (1110) of the weak solution (110) of the absorber (1100);
- The first separation bottle (1410) comprises:
∘ an inlet (1411) of the strong solution (130),
∘ an inlet (1413) of the cooling solution (140),
∘ an outlet (1412) of the weak solution (110), and
∘ an outlet (1414) of the cooling solution (140),
the first separation bottle (1410) being configured to separate the strong solution (130) into a liquid part and into a gaseous part, the gaseous part being intended to supply the cooling solution (140) and the liquid part forming the weak solution (110),
the inlet (1411) of the strong solution (130) of the first separation bottle (1410) being fluidically connected to the outlet (1240) of the strong solution (130) of the first heat exchange device (1200);
- The second separation bottle (1420) comprises:
∘ an inlet (1421) of the cooling solution (140),
∘ an outlet (1422) of the cooling solution (140), and
∘ an outlet (1423) of the cooling solution (140),
the inlet (1421) of the cooling solution (140) of the second separation bottle (1410) being fluidically connected to the outlet (1414) of the cooling solution (140) of the first separation bottle (1410);
- The heat generator (1600) comprises:
∘ an inlet (1610) of the weak solution (110),
∘ an outlet (1620) of the weak solution (110),
the heat generator (1600) being configured to make the weak solution (110) and a second external heat-transfer fluid (220) thermally interact, preferably so as to increase the temperature of the weak solution (110),
The inlet (1610) of the weak solution (110) of the heat generator (1600) being fluidically connected to the outlet (1412) of the weak solution (110) of the first separation bottle (1410) and to the outlet (1423) of the condensed solution (120) of the second separation bottle (1420),
The weak solution (110) and the condensed solution (140) being mixed at the inlet (1610) of the weak solution (110) of the heat generator (1600);
- The third separation bottle (1430) comprises:
∘ an inlet (1431) of the weak solution (110),
∘ an outlet (1432) of the weak solution (110), and
∘ an outlet (1433) of the cooling solution (140),
the inlet (1431) of the weak solution (110) of the third separation bottle (1430) being fluidically connected to the outlet (1620) of the weak solution (110) of the heat generator (1600),
the outlet (1432) of the weak solution (110) of the third separation bottle (1430) being fluidically connected to the inlet (1210) of the weak solution (110) of the first heat exchange device (1200),
the outlet (1433) of the cooling solution (140) of the third separation bottle (1430) being fluidically connected to the inlet (1413) of the cooling solution (140) of the first separation bottle (1410);
- The condenser (1700) comprises:
∘ an inlet (1710) of the cooling solution (140),
∘ an inlet (1730) of a third external heat-transfer fluid (230),
∘ an outlet (1720) of the cooling solution (140), and
∘ an outlet (1740) of the third external heat-transfer fluid (230),
the condenser (1700) being configured to make the cooling solution (140) and the third external heat-transfer fluid (230) thermally interact, so as to condense the cooling solution (140),
The inlet (1710) of the cooling solution (140) of the condenser (1700) being fluidically connected to the outlet (1422) of the cooling solution (140) of the second separation bottle (1420);
- The evaporator (1900) comprises:
∘ an inlet (1910) of the cooling solution (140),
∘ an outlet (1920) of the cooling solution (140),
the evaporator (1900) being configured to make the cooling solution (140) and a fourth external heat-transfer fluid (240) thermally interact, so as to modify the temperature of the fourth external heat-transfer fluid (240) via the evaporation of at least some of the cooling solution (140), preferably to decrease the temperature of the fourth external heat-transfer fluid (240) via the evaporation of at least some of the cooling solution (140),
the inlet (1910) of the cooling solution (140) of the evaporator (1900) being fluidically connected to the outlet of the cooling solution (1720) of the condenser (1700),
the outlet (1920) of the cooling solution (140) of the evaporator (1900) being fluidically connected to the inlet (1210) of the weak solution (110) of the first heat exchange device (1200),
The weak solution (110) and the cooling solution (140) being mixed at the inlet (1210) of the weak solution (110) of the first heat exchange device (1210);
And wherein:
- In the first configuration, the machine (1000) is configured to cool the fourth external heat-transfer fluid (240);
- In the second configuration, the first external heat-transfer fluid (210) and the third external heat-transfer fluid (230) form one common single and same external heat-transfer fluid, such that respectively the outlet (1140) of the first external heat-transfer fluid (210) of the absorber (1100) or the inlet (1130) of the first external heat-transfer fluid (210) of the absorber (1100) is fluidically connected respectively to the inlet (1730) of the third external heat-transfer fluid (230) of the condenser (1700) or the outlet (1740) of the third external heat-transfer fluid (230) of the condenser (1700), the machine (1000) thus being configured to increase the temperature of said common external heat-transfer fluid.

5. Machine (1000) according to the preceding claim, wherein at least one from among the absorber (1100), the first heat exchange device (1200), the heat generator (1600), the condenser (1700), the evaporator (1900) comprises at least one plate heat exchanger, preferably the plate heat exchanger is configured such that the fluid passing through it circulate in counter-current relative to one another.

6. Machine (1000) according to any one of claims 4 and 5 comprising a second heat exchange device (1300) comprising:
- an inlet (1330) of the strong solution (130),
- an inlet (1310) of the weak solution (110),
- an outlet (1340) of the strong solution (130),
- an outlet (1320) of the weak solution (110),
the second heat exchange device (1300) configured to make the strong solution (130) thermally interact with the weak solution (110), preferably to make the temperature of the strong solution (130) increase and to make the temperature of the weak solution (110) decrease,
the inlet (1330) of the strong solution (130) of the second heat exchange device (1300) being fluidically connected with the outlet (1240) of the strong solution (130) of the first heat exchange device (1200),
the outlet (1340) of the strong solution (130) of the second heat exchange device (1300) being fluidically connected to the inlet (1411) of the strong solution (130) of the first separation bottle (1410),
the inlet (1310) of the weak solution (110) of the second heat exchange device (1300) being fluidically connected with the outlet (1432) of the weak solution (110) of the third separation bottle (1430),
the outlet (1320) of the weak solution (110) of the second heat exchange device (1300) being fluidically connected with the inlet (1210) of the weak solution (110) of the first heat exchange device (1200), preferably the second heat exchange device (1300) comprises at least one plate heat exchanger, preferably the weak solution (110) and the strong solution (130) circulate in counter-current in the plate heat exchanger of the second heat exchange device (1300).

7. Machine (1000) according to any one of claims 4 to 6 comprising a third heat exchange device (1500) comprising:
- a main inlet (1510) of the cooling solution (140),
- a main outlet (1520) of the cooling solution (140),
- a secondary inlet (1530) of the strong solution (130),
- a secondary outlet (1540) of the strong solution (130),
- an additional inlet (1550) of a fifth external heat-transfer fluid (250),
- an additional outlet (1560) of the fifth external heat-transfer fluid (250),
the third heat exchange device (1500) being configured to make the cooling solution (140) thermally interact with the strong solution (130) so as to increase the temperature of the strong solution (130), and the cooling solution (140) with a fifth external heat-transfer fluid (250) so as to decrease the temperature of the cooling solution (140),
the main inlet (1510) of the cooling solution (140) of the third heat exchange device (1500) being fluidically connected to the outlet (1414) of the cooling solution (140) of the first separation bottle (1410),
the main outlet (1520) of the cooling solution (140) of the third heat exchange device (1500) being fluidically connected to the inlet (1421) of the cooling solution (140) of the second separation bottle (1420),
the secondary inlet (1530) of the strong solution (130) of the third heat exchange device (1500) being fluidically connected to the outlet (1240) of the strong solution (130) of the first heat exchange device (1200),
the secondary outlet (1540) of the strong solution (130) of the third heat exchange device (1500) being fluidically connected to the inlet (1411) of the strong solution (130) of the first separation bottle (1410), preferably the third heat exchange device (1500) comprises at least one plate heat exchanger, preferably the preceding claim, wherein the cooling solution (140) and the strong solution (130) circulate in counter-current in the plate heat exchanger of the third heat exchange device (1500).

8. Machine (1000) according to any one of the preceding claim combined with claim 6, wherein the secondary outlet (1540) of the strong solution (130) of the third heat exchange device (1500) is fluidically connected to the inlet (1330) of the strong solution (130) of the second heat exchange device (1300).

9. Machine (1000) according to any one of claims 4 to 8 comprising a fourth heat exchange device (1800) comprising:
- a main inlet (1810) of the cooling solution (140),
- a main outlet (1820) of the cooling solution (140),
- a secondary inlet (1830) of the cooling solution (140), and
- a secondary outlet (1840) of the cooling solution (140),
the fourth heat exchange device (1800) being configured to make the cooling solution (140) thermally interact with itself, before it enters into the evaporator (1900) and after it exits from the evaporator (1900),
the main inlet (1810) of the cooling solution (140) of the fourth heat exchange device (1800) being fluidically connected to the outlet (1720) of the cooling solution (140) of the condenser (1700),
the main outlet (1820) of the cooling solution (140) of the fourth heat exchange device (1800) being fluidically connected to the main inlet (1910) of the cooling solution (140) of the evaporator (1900),
the secondary inlet (1830) of the cooling solution (140) of the fourth heat exchange device (1800) being fluidically connected to the main outlet (1920) of the cooling solution (140) of the evaporator (1900),
the secondary outlet (1840) of the cooling solution (140) of the fourth heat exchange device (1800) being fluidically connected to the inlet (1210) of the weak solution (110) of the first heat exchange device (1200), preferably the fourth heat exchange device (1800) comprises at least one plate heat exchanger, preferably the weak solution (110) exiting from the condenser (1700) and the weak solution (110) exiting from the evaporator (1900) circulate in counter-current in the plate heat exchanger of the fourth heat exchange device (1800).

10. Machine (1000) according to any one of claims 4 to 9, comprising at least one device for increasing the pressure of the cooling solution fluidically connected between the outlet (1920) of the cooling solution (140) of the evaporator (1900) and the inlet (1210) of the weak solution (110) of the first heat exchange device (1200), so as to increase the pressure of the mixture of the weak solution (110) with the cooling solution (140) in the first heat exchange device (1200), preferably in the absorber (1100).

11. Machine (1000) according to any one of claims 4 to 10, comprising at least one first expansion valve (410) comprising:
- an inlet (411) of the weak solution (110), and
- an outlet (412) of the weak solution (110),
the first expansion valve (410) being configured to modify the temperature of the weak solution (110), preferably to modify the temperature of the weak solution (110) by isenthalpic expansion,
the inlet (411) of the weak solution (110) of the expansion valve (410) being fluidically connected to the outlet (1432) of the weak solution (110) of the third separation bottle (1430).

12. Machine (1000) according to the preceding claim, combined with claim 6, wherein the inlet (411) of the weak solution (110) of the first expansion valve (410) is fluidically connected to the outlet (1320) of the weak solution (110) of the second heat exchange device (1300).

13. Machine (1000) according to any one of claims 4 to 12 comprising at least one second expansion valve (420) comprising:
- an inlet (421) of the cooling solution (140), and
- an outlet (422) of the cooling solution (140),
the second expansion valve (420) being configured to modify the temperature of the cooling solution (140), preferably to modify the temperature of the cooling solution (140) by isenthalpic expansion,
the inlet (421) of the cooling solution (140) of the second expansion valve (420) being fluidically connected to the outlet (1720) of the cooling solution (140) of the condenser (1700), preferably at the outlet of the cooling solution (140) of the fourth heat exchange device,
the outlet of the cooling solution (140) being fluidically connected to the main inlet of the cooling solution (140) of the evaporator (1900).

14. Machine (1000) according to the preceding claim, combined with claim 9, wherein the inlet (421) of the cooling solution (140) of the second expansion valve (420) is fluidically connected to the main outlet (1820) of the cooling solution (140) of the fourth heat exchange device (1800).

15. Machine (1000) according to any one of claims 4 to 14 comprising at least one solution pump (300) comprising:
- an inlet (310) of the strong solution (130), and
- an outlet (320) of the strong solution (130),
the solution pump (300) being configured to modify the pressure of the strong solution (130), preferably to increase the pressure of the strong solution (130),
the inlet (310) of the strong solution (130) of the solution pump (300) being fluidically connected to the outlet (1120) of the strong solution (130) of the absorber (1100), and
the outlet (320) of the strong solution (130) of the solution pump (300) being fluidically connected to the inlet (1230) of the strong solution (130) of the first heat exchange device (1200).
